# EUROPEAN PATENT APPLICATION

(11) **EP 1 650 677 A1**
(43) Date of publication of application: **26.04.2006**
(21) Application number: 05109543.8
(22) Date of filing: 13.10.2005
(51) Int. Cl.: G06F 17/30

(54) **Rental service system**

(30) Priority: 21.10.2004 JP 2004307221
(71) Applicant: NEC CORPORATION, Minato-ku, Tokyo 108-8001 (JP)
(72) Inventor: Kimura, Tsutomu, 108-8001, Tokyo (JP)
(74) Representative: Betten & Resch

(57) **Abstract**

A rental service server includes a storage unit and search unit. The storage unit stores rental product information containing rental product identification information and at least one feature information, rental information containing information representing whether a rental product has been rented, and reservation information containing information representing whether the rental product has been reserved. The search unit receives, as a search condition, at least part of the rental product identification information and rental product feature information from at least one user terminal, searches the storage unit under the search condition, specifies corresponding rental product information and at least one of the rental information and reservation information, and outputs the specified rental product information and rental status information of the rental product to the user terminal. A rental service system is also disclosed.

## Description

### Background of the Invention

The present invention relates to a rental service server and rental service system which improve user friendliness in rental services of video tapes, CDs, DVDs, and the like.

Conventionally, when the user wants to rent a product from a rental shop, he visits the rental shop, selects a product to be viewed from available products such as video tapes, CDs, and DVDs, and rents the selected product.

When all products desired by the user have been rented or are not dealt with, the user must visit a plurality of rental shops and search for them in order to rent target products, or give up viewing.

Recently, some rental shops provide services of making a request for a product to be rented on a Web site, and delivering a product and returning it by mail. By visiting the on-line rental shop, the user can easily confirm the presence/absence of a product to be rented, and need not actually visit a shop and search for a target product.

When the user visits a rental shop, he does not always definitely decide a product to be viewed, but he often decides a movie to be viewed or the like while checking the packages of many products or the like in the shop. From this, it is not always useless to search for a product in a rental shop. In the rental shop, the user often has fun of searching for a product the user has not been interested so far but potentially wants to view or a product the user has not recognized as a viewing target but may want to view.

Hence, user satisfaction can be improved by not only specifying a target product in a rental shop but instructing the user to such a viewing target in the rental shop.

A product the user vaguely wants to rent but cannot specify is, e.g., a program which has been viewed on TV but can be recognized only upon actually viewing it because the title is unknown. If such a product can be specified, the benefit to the user is great.

Prior arts concerning rental are, e.g., reference 1 "Mail Service System for Rental Member" (Japanese Patent Laid-Open No. 2002-007916), reference 2 "Commodity Rental System" (Japanese Patent Laid-Open No. 2002-197380), reference 3 "Rental Commodity Data Processing System" (Japanese Patent Laid-Open No. 2002-245312), reference 4 "Rental Merchandise Information Management Device" (Japanese Patent Laid-Open No. 2002-312701), and reference 5 "Rental System for Articles" (Japanese Patent Laid-Open No. 2003-157399).

According to the mail service system for rental member in reference 1, sending conditions for e-mail containing information on a rental product item are stored on the rental shop side together with a member ID. When the sending conditions are satisfied, the e-mail can be sent to the member. Reservation of a rental product item is accepted, and when the product item becomes rentable, e-mail to this effect can be sent. To specify a product, not only its title but also an artist's name, leading actor's name, leading actress's name, or the like can be used for search.

According to the commodity rental system in reference 2, when a request to determine whether a designated product can be rented is transmitted from a user terminal apparatus to an information processing apparatus in a rental shop, the information processing apparatus in the rental shop can transmit product information having the determination result to the user terminal apparatus. When the product cannot be rented, the information processing apparatus can notify the user terminal apparatus of product information representing that the product becomes rentable after it becomes available. When the product cannot be rented, the user terminal apparatus can transmit reservation data to the information processing apparatus in the rental shop.

According to the rental commodity data processing system in reference 3, when a product is returned, e-mail representing that a reserved product becomes rentable can be sent to the terminal of the member who has requested the product. An expiration date is set for reservation, and only a member who has requested the product and visits the shop before the expiration date of reservation can rent a reserved product. After the expiration date of reservation, the product is reserved for another customer. A reservation number slip is transmitted to the terminal of the member who has requested the product, and he prints the slip and brings it to the shop. By scanning the slip in the shop, the reservation number can be confirmed.

According to the rental merchandise information management device in reference 4, rental reservation of a product, notification of information, authentication of fee payment, and the like can be performed at a remote place by using a cell phone. In a rental shop, favorite type information of a rental member can be calculated on the basis of the rental frequency of the user, and products to be announced to the user can be selected from new products on the basis of the favorite type information.

According to the rental system for articles in reference 5, when a product has been rented and the user wants to view it as soon as possible, he can be provided with the digest version of the product and can also download or stream the entire product. Before rental, the user can actually listen to and view music and pictures. When a rental product is returned, the user terminal can be notified that the product becomes rentable.

However, these prior arts cannot arouse user's potential interests on rental products.

That is, these prior arts are not suitable for narrowing rental products to one to be viewed or newly finding rental products on the basis of insufficient information when the user searches for a rental product.

For example, even for a rental product whose artist's name, leading actor's name, leading actress's name, or the like is unknown, relevant rental products are sequentially specified from slight clues such as music in use. During this process, the user can be provided with various types of relevant information, new interests of the user can be aroused, and the user can find out a target product at higher possibility.

Conventionally, the user refers to images, descriptions, and the like on the packages of rental products when checking rental products in a rental shop. By providing much more information in addition to the package information, user friendliness can be further improved in rental services.

### Summary of the Invention

The present invention has been made in consideration of the above situation, and has as its object to further improve user friendliness in rental services of video tapes, CDs, DVDs, and the like.

To achieve the above object, according to the present invention, there is provided a rental service server comprising storage means for storing rental product information containing rental product identification information and at least one feature information, rental information containing information representing whether a rental product has been rented, and reservation information containing information representing whether the rental product has been reserved, and search means for receiving, as a search condition, at least part of the rental product identification information and the rental product feature information from at least one user terminal, searching the storage means under the search condition, specifying corresponding rental product information and at least one of the rental information and the reservation information, and outputting the specified rental product information and rental status information of the rental product to the user terminal.

According to the present invention, there is provided a rental service system comprising at least one user terminal, and a rental service server which specifies a rental product on the basis of information received from the user terminal and performs either of rental and reservation registration, wherein the user terminal transmits, as a search condition to the rental service server, at least part of rental product identification information and rental product feature information, and the rental service server comprises storage means for storing rental product information containing rental product identification information and at least one feature information, rental information containing information representing whether a rental product has been rented, and reservation information containing information representing whether the rental product has been reserved, and search means for, upon reception of the search condition from the user terminal, searching the storage means under the search condition, specifying corresponding rental product information and at least one of the rental information and the reservation information, and transmitting the specified rental product information and rental status information of the rental product to the user terminal.

### Brief Description of the Drawings

Fig. 1 is a block diagram showing the configuration of a rental service system according to the first embodiment of the present invention;
Fig. 2 is a block diagram showing the configuration of a user portable terminal in the rental service system according to the first embodiment of the present invention;
Fig. 3 is a block diagram showing the configuration of a rental service server in the rental service system according to the first embodiment of the present invention;
Fig. 4 is a block diagram showing the configuration of a storage unit in the rental service server shown in Fig. 3;
Fig. 5 is a block diagram showing the configuration of a search unit in the rental service server shown in Fig. 3;
Fig. 6 is an operation sequence chart showing a reservation rental process sequence in the rental service system according to the first embodiment of the present invention;
Fig. 7 is an operation sequence chart showing a product detection process sequence in the rental service system according to the first embodiment of the present invention;
Fig. 8 is a block diagram showing the configuration of a rental service server in a rental service system according to the second embodiment of the present invention;
Fig. 9 is a block diagram showing the configuration of a rental service server in a rental service system according to the third embodiment of the present invention;
Fig. 10 is a block diagram showing the configuration of a rental service server in a rental service system according to the fourth embodiment of the present invention;
Fig. 11 is a block diagram showing the configuration of a rental service server in a rental service system according to the fifth embodiment of the present invention;
Fig. 12 is a block diagram showing the configuration of a rental service server in a rental service system according to the sixth embodiment of the present invention;
Fig. 13 is a block diagram showing the configuration of a rental service system according to the seventh embodiment of the present invention;
Fig. 14 is a block diagram showing the configuration of a rental service server in the rental service system according to the seventh embodiment of the present invention;
Fig. 15 is a view showing a rental shop display window in the rental service system according to the seventh embodiment of the present invention;
Fig. 16 is a block diagram showing the configuration of a search unit in the rental service server shown in Fig. 14;
Fig. 17 is an operation sequence chart showing a reservation rental process sequence in the rental service system according to the seventh embodiment of the present invention;
Fig. 18 is a block diagram showing the configuration of a rental service server in a rental service system according to the eighth embodiment of the present invention;
Fig. 19 is an operation sequence chart showing a reservation rental process sequence in the rental service system according to the eighth embodiment of the present invention;
Fig. 20 is a block diagram showing the configuration of a rental service system according to the ninth embodiment of the present invention; and
Fig. 21 is an operation sequence chart showing a reservation rental process sequence in the rental service system according to the ninth embodiment of the present invention.

### Description of the Preferred Embodiments

Preferred embodiments of a rental service system according to the present invention will be described below with reference to the accompanying drawings.

The rental service system in the following embodiments of the present invention is operated by a computer which is controlled by a program. The CPU of the computer issues instructions to building components of the computer on the basis of the program, and causes them to perform predetermined processes necessary for operation of a rental service server, such as a product specifying process, relevant information acquisition process, and discount calculation process. Processes and operation in the rental service system of the present invention can be implemented by a concrete means in cooperation with the program and computer.

The program is recorded in advance on a recording medium (e.g., ROM or RAM), loaded into a computer from the recording medium inserted into the computer, and executed by the computer. The program can also be loaded into the computer via, e.g., a communication line.

The recording medium which stores the program can be formed from, e.g., a semiconductor memory, magnetic disk, optical disk, or another arbitrary computer-readable recording means.

### [First Embodiment]

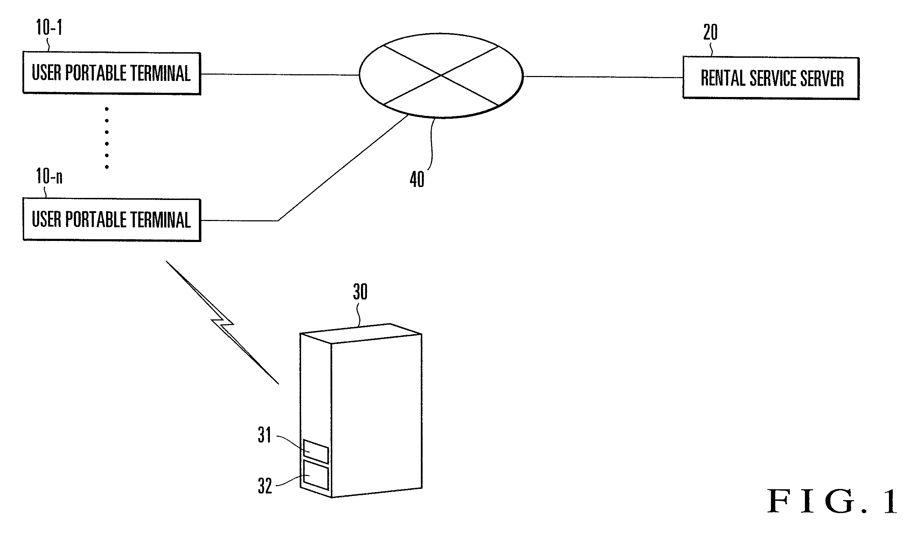

A configuration according to the first embodiment of the present invention will be described with reference to Figs. 1 to 7.

As shown in Fig. 1, a rental service system according to the first embodiment comprises user portable terminals 10 (10-1 to 10-n), a rental service server 20, a rental product 30, an RF-ID tag (Radio Frequency Identification System: to be also referred to as a radio tag) 31, a 2D code 32, and a communication line 40.

### [User Portable Terminal 10]

The user portable terminal 10 is an information processing apparatus used by the user, and is, e.g., a cell phone, personal computer, PDA, or PHS. The first embodiment assumes that a cell phone is used as the user portable terminal 10.

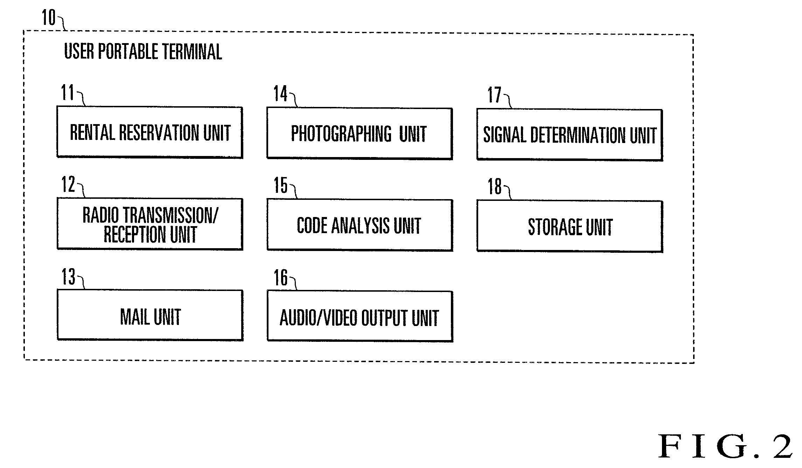

As shown in Fig. 2, the user portable terminal 10 comprises a rental reservation unit 11, radio transmission/reception unit 12, mail unit 13, photographing unit 14, code analysis unit 15, audio/video output unit 16, signal determination unit 17, and storage unit 18. Fig. 2 shows a configuration necessary for the description of the first embodiment, and other general components of the cell phone can be contained in the configuration.

The rental reservation unit 11 implements processes from search for a rental product up to rental and reservation of it. The rental reservation unit 11 is, e.g., a general browser in the user portable terminal 10 by a CPU, memory, or the like. The user portable terminal 10 can use the rental reservation unit 11 to access a Web site for rental services in the rental service server 20, receive the homepage, and display it on the display of the user portable terminal 10 or the like.

Through the homepage, search information can be input and transmitted to the rental service server 20, or a search result can be received. Also, rental request information and reservation request information can be transmitted to the rental service server 20 via the homepage.

Instead of using the browser as the rental reservation unit 11, for example, a window dedicated to receive/transmit the above information can also be formed as the rental reservation unit 11 in the user portable terminal 10.

The radio transmission/reception unit 12 transmits/receives information between the user portable terminal 10 and the rental service server 20 via the communication line 40, and receives a radio signal from a radio tag or the like. The radio transmission/reception unit 12 can be formed from an antenna, input/output interface, and the like.

The mail unit 13 forms a mailer in the user portable terminal 10, and can be a well-known one which is made up of a CPU, memory, and the like. The mail unit 13 can receive a rental enable notification from the rental service server 20, and transmit a reply to it to the rental service server 20.

The photographing unit 14 is a camera device in the user portable terminal 10, and can be a general one capable of photographing a 2D code and the like.

The code analysis unit 15 analyzes, e.g., a 2D code photographed by the photographing unit 14, and reads information (to be also referred to as code information hereinafter) contained in the code. The code analysis unit 15 can be made up of a CPU, memory, and the like. When a 2D code or the like is photographed by the photographing unit 14, the code analysis unit 15 is activated.

Based on analyzed information, the code analysis unit 15 can receive corresponding information from the rental service server 20.

As a method of receiving information, for example, a 2D code holds URL (Uniform Resource Locator) information representing a save location in an information processing apparatus at which video information of a rental product bearing the 2D code is stored. After the URL is acquired upon analysis by the code analysis unit 15, the user portable terminal 10 can access the URL. The first embodiment assumes that the URL is an address in the rental service server 20. However, the present invention is not limited to this, and a URL in another database server or the like can also be used.

A 2D code can also hold identification information of a rental product bearing the 2D code.

In this case, the code analysis unit 15 can transmit the rental product identification information acquired by analysis to the rental service server 20. The rental service server 20 can search a product DB (database: to be described later) on the basis of the received rental product identification information, acquire corresponding video information or the like, and transmit the acquired information to the user portable terminal 10.

Note that the 2D code used in the first embodiment is not particularly limited, and various codes can be adopted. For example, a QR code®, DATAMATRIX®, MAXICODE, and PDF417 can be used.

Information transmitted to the user portable terminal 10 on the basis of the 2D code is not limited to video information, and various types of information such as music information can be transmitted. Details of the information will be explained later in the description of the rental service server 20.

The audio/video output unit 16 outputs music information, video information, and the like which are received by the user portable terminal 10. The audio/video output unit 16 is arbitrary as far as it can output a moving picture.

The signal determination unit 17 is formed from a CPU, memory, and the like. Upon reception of a radio signal via the radio transmission/reception unit 12 from the radio tag 31 added to a rental product, the signal determination unit 17 compares the radio signal with a rental product identification signal which is stored in advance in the storage unit 18. When these signals coincide with each other, the signal determination unit 17 outputs a predetermined sound or the like. The user can recognize that the target rental product is near him.

The storage unit 18 is a storage device which stores various types of information, and can be formed from a memory, hard disk, or the like. The storage unit 18 can store a member number and password for authenticating the user, the name, address, and telephone number of the user, and the like. The storage unit 18 can also store the rental product identification signal received from the rental service server 20. The storage unit 18 can further store rental information and reservation information. The storage unit 18 can store download information of music or a picture which is received from the rental service server 20 and associated with a rental product, or temporarily store streaming information.

### [Rental Service Server 20]

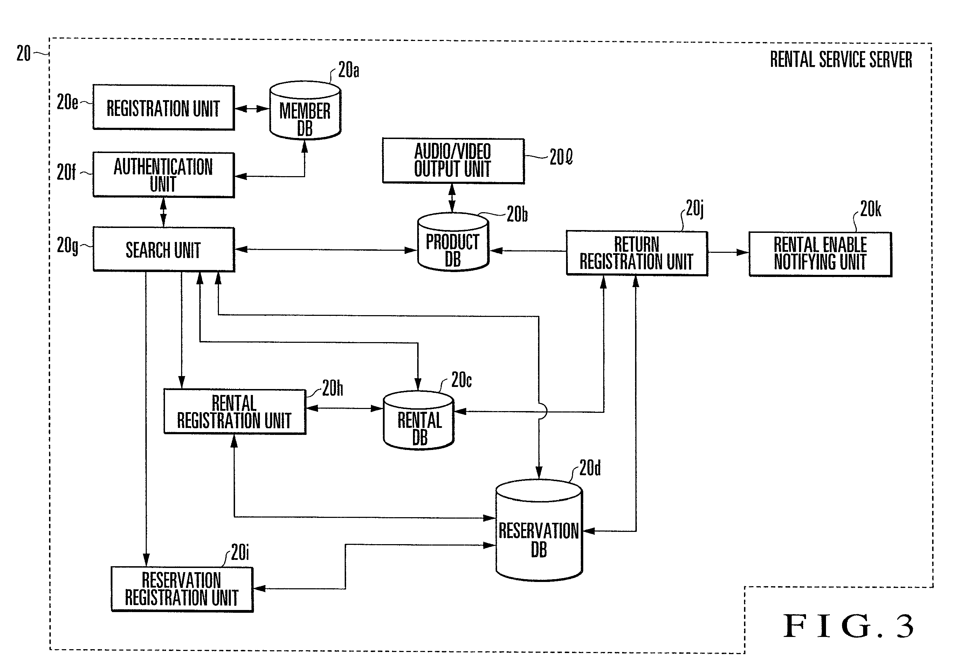

The configuration of the rental service server 20 will be explained with reference to Fig. 3.

The rental service server 20 is an information processing apparatus used in a rental shop, and can be implemented by a workstation, server, personal computer, or the like.

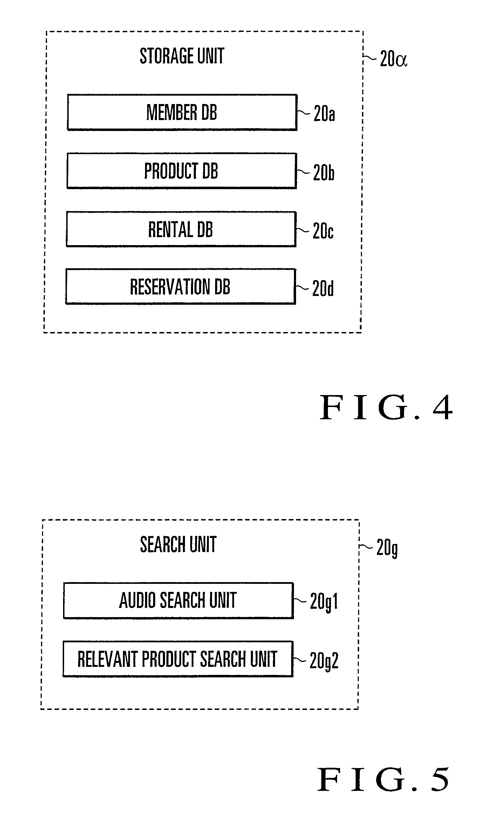

As shown in Fig. 3, the rental service server 20 comprises a member DB 20a, product DB 20b, rental DB 20c, reservation DB 20d, registration unit 20e, authentication unit 20f, search unit 20g, rental registration unit 20h, reservation registration unit 20i, return registration unit 20j, rental enable notifying unit 20k, and audio/video output unit 201. In Fig. 3, general components of the information processing apparatus such as a data input unit (e.g., a keyboard and microphone) and a display unit (e.g., a display) are omitted. As shown in Fig. 4, the member DB 20a, product DB 20b, rental DB 20c, and reservation DB 20d construct a storage unit 20α. The storage unit 20α is formed from a memory, hard disk, or the like in the rental service server 20, and the remaining units shown in Fig. 3 other than the storage unit 20α are formed from a CPU, memory, and the like.

### [Member DB 20a]

The member DB 20a is a storage unit which stores member information of the user. The member DB 20a holds a member ID, password, mail address, and the like for each user, and if necessary, can hold various types of personal information of the user such as the address, telephone number, birthday, occupation, credit card number, and the like.

### [Product DB 20b]

The product DB 20b is a storage unit (rental product information storage unit) which stores rental product information. Data items in the product DB 20b are, e.g., a product code (product identification information), various types of product information (product feature information), rental flag, radio tag identification information, and rental type.

Various types of product information mean information used for search, information to be output as a search result, and the like. For example, various types of product information contain a product name (product identification information), a text, image, picture, and music for explaining a product (text, image, picture, and music associated with a product), position information of a product in a rental shop, matching data used for search by voice, and a relevant rental product code. When a product is the video tape, DVD, or VCD of a movie, various types of product information hold a director's name, cast's names, a theme song, and the like. When a product is a music CD or the like, various types of product information hold the title of a song, a singer's name, a songwriter's name, an artist's name, and the like. When a product is a book or the like, various types of product information hold a writer's name, a translator's name, an illustrator's name, the name of a received award, and the like. In this way, various types of product information preferably hold a variety of items so that a product can be searched for on the basis of these items.

The rental flag is used to identify whether a target product has been rented. The rental flag is set to "1" (ON) when a target product has been rented, and "0" (OFF) when it is not rented and is available.

Radio tag identification information represents signal information output from a radio tag added to a rental product, and the rental type is information for identifying the type of rental. The rental type is necessary when the rental fee, rental period, and the like change depending on a rental product. A table to store the rental fee and rental period of each rental type can be constructed in the product DB 20b or separately.

When there are a plurality of identical rental products, the same product code is used for them, and the record of only one of them can be held in various types of product information. Alternatively, a plurality of product codes are held in one record to manage the rental products, or various types of product information are created in an independent table and commonly used. As a detailed structure of the DB, various forms can be taken, which also applies to other DBs to be described later.

### [Rental DB 20c]

The rental DB 20c is a storage unit which stores information (rental information) on a rented product. Data items in the rental DB 20c are, e.g., a product code, the member ID of a renter, a rental period (start date and end date (planned due date)), and a due date.

### [Reservation DB 20d]

The reservation DB 20d is a storage unit which stores information (reservation information) on a reserved product. Data items in the reservation DB 20d are, e.g., a product code, rental type, the member ID of a member who has reserved a product, a reservation period (start date (desired rental start date or the like) and end date), and a rental enable notification flag.

The start date of the reservation period can be set to a date (desired rental start date) designated by the user. In addition, information representing that rental starts immediately after a product is returned can be set.

As a desired rental start date, only a date after the planned due date of a reserved product in the rental DB 20c can be designated.

When the user inputs reservation information, information representing that rental immediately starts allows the user to select the start of rental immediately after a product is returned. This information can be automatically set on the basis of the selection input. Immediately when return of the product is registered, rental information is registered in the rental DB 20c on the basis of the reservation information, the current date is set as the start date of the rental period, and the due date of the product can be set.

The end date of the reservation period can be automatically set on the basis of a rental period corresponding to the rental type of a reserved product.

The rental enable notification flag is recorded to identify a state in which a reserved product is returned, the due date is registered in the rental DB 20c, and a rental enable notification is transmitted to the user portable terminal. For example, the rental enable notification flag can be set to "1" for a member who has reserved a product and has received a rental enable notification, and "0" for a member who has reserved a product but does not receive any rental enable notification.

A plurality of reservations can also be registered for one rental product. For example, the member ID of a member who has reserved a product, the reservation period, cancellation/non-cancellation, the rental enable notification flag, and the like can be registered for reservations from five members per record.

If a reserved product cannot be rented on a desired rental start date due to delay of return by a previous renter, damage to the product, or the like, the product code items of the second and subsequent choices can also be held as alternate products in the reservation DB 20d.

As an item in the reservation DB 20d, cancellation/non-cancellation can be held. The user can register whether to cancel a reserved product when it cannot be rented on a desired rental start date, or wait until the product becomes rentable.

### [Registration Unit 20e]

The registration unit 20e transmits member information registration window information to the user portable terminal 10, and registers, in the member DB 20a, user's member information which is input via the member information registration window and transmitted from the user portable terminal 10.

The registration method is not particularly limited. For example, the user portable terminal 10 accesses a Web site for providing rental services of the rental service server 20, displays the member information registration window, inputs member information to the window, and transmits the member information to the rental service server 20. Then, the registration unit 20e stores the member information in the member DB 20a. At this time, as for a member ID and password, those input by the user can be used, or they can be automatically generated by the registration unit 20e.

### [Authentication Unit 20f]

The authentication unit 20f transmits log-in window information to the user portable terminal 10, and performs user authentication on the basis of whether log-in information (member ID, password, and the like) which is input via a log-in window and transmitted from the user portable terminal 10 has been registered in the member DB 20a. The user authentication method is not particularly limited. By performing user authentication, a user who has accessed the rental service server 20 from the user portable terminal 10 can be identified, and member information of the user in the member DB 20a can be used for subsequent processes. Whether access from the user portable terminal 10 to the rental service server 20 has undergone user authentication can be stored in an intermediate file or the like.

### [Search Unit 20g]

The search unit 20g transmits search window information to the user portable terminal 10 in response to a request from at least one user portable terminal 10, and searches the product DB 20b on the basis of search conditions which are input via the search window and transmitted from the user portable terminal 10. The search unit 20g specifies a corresponding rental product, acquires information on the specified rental product from the product DB 20b, and transmits the acquired information as a search result to the user portable terminal 10.

As the search conditions, various types of feature information can be utilized in addition to the name of a rental product. For example, a director's name, cast's names, the name of a theme song, and the like can be used, and music used in the rental product, an image obtained from the rental product, and the like can also be used. The search unit 20g checks whether these pieces of information are registered in various types of product information held in the product DB 20b.

The search unit 20g can also search for a rental product on the basis of audio information transmitted from the user portable terminal 10. As the search method based on audio information, for example, the search unit 20g can measure the appearance count of the voice band from audio information at predetermined intervals, and specify a product for which the change rate of the count matches matching data of audio information in the product DB 20b. Search based on audio information is executed by an audio search unit 20g1 of the search unit 20g in Fig. 5.

The search unit 20g acquires the rental status of the specified product. The rental status can be acquired by searching the rental DB 20c and reservation DB 20d. More specifically, the search unit 20g acquires rental information from the rental DB 20c and reservation information from the reservation DB 20d on the basis of the product code of the specified product, and regards all or some pieces of information as the rental status.

On the basis of the rental period in the rental information, the reservation period in the reservation information, and a rental period corresponding to the rental type of the specified product, the search unit 20g determines whether the product can be rented, and adds the determination result to the rental status.

For example, when the current date falls within the rental period in the rental information, the product has been rented, and it can be determined that the product cannot be rented.

When the current date does not fall within the rental period in the rental information but reservation information exists for the product, it can be determined that the product cannot be rented.

Further, when reservation information exists for the product, a desired rental start date is registered in the reservation information, and the period from the current date to the desired rental start date is shorter than a rental period corresponding to the rental type of the product, it can be determined that the product cannot be rented; otherwise, it can be determined that the product can be rented.

As the rental status, information based on only whether a specified product has been rented can also be held. In this case, the search unit 20g can obtain the rental status by referring to the rental flag in the product DB 20b. For example, the search unit 20g can obtain a rental status in which a product cannot be rented for the rental flag = "1" and can be rented for the rental flag = "0".

As information on a specified product, the search unit 20g can transmit various types of information registered in the product DB 20b, e.g., the descriptive text, image, picture, and music of the product, position information of the product in a rental shop, and information on a rental product relevant to the specified product. At this time, information on the relevant rental product can be obtained by searching the product DB 20b on the basis of the product codes of relevant products which are registered for each product in the product DB 20b.

When the search unit 20g specifies a plurality of products, it can transmit various types of product information, the rental status, relevant information, and the like for all the specified products to the user portable terminal 10. At this time, it is also possible to transmit only product names to the user portable terminal 10, and transmit the above information to the user portable terminal 10 for only a product whose name is selected and transmitted from the user portable terminal 10.

A search request from the user portable terminal 10 to the rental service server 20 can be transmitted by, e.g., clicking a search button on the homepage of rental services provided by the rental service server 20. From the above-mentioned intermediate file or the like which stores the result of user authentication, the search unit 20g confirms whether user authentication has been done. If user authentication is not performed, the authentication unit 20f executes the above-described process, and can perform search after user authentication.

Search can also be executed without any user authentication. When the search unit 20g transmits a search result to the user portable terminal 10 and the user portable terminal 10 issues a rental request or reservation request to the rental service server 20, the authentication unit 20f can execute the above-described process.

### [Rental Registration Unit 20h]

The rental registration unit 20h registers rental information in the rental DB 20c in response to a request from the user portable terminal 10. More specifically, when the search unit 20g transmits, as a search result, a rental status representing that a product specified by the user portable terminal 10 can be rented, and the user portable terminal 10 transmits a request to rent the product, the rental registration unit 20h registers the product code and rental type of the product, the member ID of a renter, the rental period, and the like in the rental DB 20c.

The rental registration unit 20h registers rental information in the rental DB 20c on the basis of reservation information. More specifically, when the rental registration unit 20h receives, from a mail unit (not shown) in the rental service server 20, information representing that reply mail to a rental enable notification has been received from the user portable terminal 10, the rental registration unit 20h registers rental information in the rental DB 20c for a member who has reserved a product and is the user of the user portable terminal 10.

At this time, the rental registration unit 20h can acquire reservation information by the member who has reserved a product from the reservation DB 20d, transcribe the reservation information in the rental DB 20c, and delete the reservation information by the member who has reserved a product from the reservation DB 20d.

### [Reservation Registration Unit 20i]

The reservation registration unit 20i registers reservation information in the reservation DB 20d in response to a request from the user portable terminal 10. More specifically, when the search unit 20g transmits, as a search result to the user portable terminal 10, a rental status representing that a specified product cannot be rented, and the user portable terminal 10 transmits reservation information containing the product code and rental type of the product, the member ID of a member who has reserved a product, and the reservation period, the reservation registration unit 20i registers the reservation information in the rental DB 20c.

Upon reception of a reservation request from the user portable terminal 10, the reservation registration unit 20i transmits reservation registration window information to the user portable terminal 10, and registers, in the reservation DB 20d, reservation information which is input via the reservation registration window and transmitted from the user portable terminal 10.

In registering reservation information, the reservation registration unit 20i searches the rental DB 20c on the basis of the product code. Only when a desired rental start date in the reservation information is later than a planned due date, the reservation registration unit 20i can register the reservation information. When a desired rental start date in the reservation information is earlier than the planned due date, the reservation registration unit 20i can output a message to prompt the user to set the desired rental start date later than the planned due date.

### [Return Registration Unit 20j]

The return registration unit 20j registers information representing that a rental product has been returned. The registration method is not particularly limited. For example, a due date is registered in the rental DB 20c, and the rental flag in the product DB 20b is set OFF.

The return registration unit 20j can output a return registration window to the display unit of the rental service server 20. Rental information which is registered in the rental DB 20c and does not register any due date is displayed in the return registration window. Input of a due date is accepted for only a returned product among rental products, and the due date is registered in the rental DB 20c. At the same time, the rental flag of the product in the product DB 20b is set OFF.

The return registration unit 20j outputs the product code of the returned rental product to the rental enable notifying unit 20k so that the rental product can be rented.

### [Rental Enable Notifying Unit 20k]

Upon reception of the product code of a returned rental product from the return registration unit 20j, the rental enable notifying unit 20k searches the reservation DB 20d on the basis of the product code, and confirms whether reservation information of the product having the product code has been registered. If the reservation information has been registered, the rental enable notifying unit 20k searches the member DB 20a on the basis of the member ID of a member who has reserved a product, acquires a corresponding mail address, and transmits to the mail address a rental enable notification representing that the reserved product becomes rentable.

### [Audio/Video Output Unit 20l]

Upon reception of information (code information) read from a 2D code by the user portable terminal 10, the audio/video output unit 20l acquires information corresponding to the code information and transmits the acquired information to the user portable terminal 10. For example, when the code information is a URL (information on the save location of a rental product), the audio/video output unit 20l can acquire music information or video information on a rental product from the product DB 20b on the basis of the URL, and transmit the acquired information to the user portable terminal 10. When the code information is a product code (rental product identification information), the audio/video output unit 20l can search the product DB 20b on the basis of the product code, acquire music information and video information on the rental product 30, and transmit the acquired information to the user portable terminal 10.

In transmitting video information and music information to the user portable terminal 10, the audio/video output unit 20l can prompt the user portable terminal 10 to download these pieces of information. At this time, in order to suppress secondary use by the user, the qualities of video information and music information are preferably degraded to transmit the degraded video information and music information to the user portable terminal 10.

Moreover, in transmitting video information and music information to the user portable terminal 10, the audio/video output unit 20l can transmit these pieces of information to the user portable terminal 10 by streaming. Streaming is preferably performed from an arbitrary position on the basis of playback position information transmitted from the user portable terminal 10.

### [Rental Product 30]

The rental product 30 represents a rental product in a rental shop, and is a rental video tape in the example of Fig. 1. In the example of Fig. 1, the radio tag 31 and 2D code 32 are added to the spine of the rental video tape.

### [Radio Tag 31]

The radio tag 31 outputs a predetermined radio signal for identifying the rental product 30. The type of radio signal is not particularly limited, and the radio signal can be a signal by radio waves, electromagnetic waves, or the like. The shape of the radio signal is also arbitrary.

In order to receive a radio signal from the radio tag 31 when the user moves around a rental shop while bringing the user portable terminal 10 with him, the signal output distance is preferably set to several cm to several ten cm.

The same configuration can also be adopted when the radio tag 31 is added to a rental product such as a DVD, CD, or book other than a rental video tape.

### [2D Code 32]

The 2D code 32 is added to the rental product 30 in order to provide the user with information more than one obtained from the back cover of the rental product 30 or the like. For example, the 2D code 32 can be formed from a QR code® to represent, e.g., a URL for providing information on the rental product 30.

The user portable terminal 10 photographs and analyzes the 2D code 32, and acquires, e.g., a URL recorded on the 2D code 32. The user portable terminal 10 can access the URL and receive more detailed information. For example, when the rental product 30 is a movie, the user portable terminal 10 can receive and display a moving picture such as the preview of the movie from the URL.

The 2D code 32 can also hold the product code of the rental product 30. The user portable terminal 10 photographs and analyzes the 2D code 32, acquires a product code recorded on the 2D code 32, and transmits the product code to the rental service server 20. The audio/video output unit 201 in the rental service server 20 searches the product DB 20b on the basis of the product code, acquires product information corresponding to the rental product 30, and transmits the product information to the user portable terminal 10. The corresponding product information is video information when the rental product 30 is a video tape or DVD, music information and video information when the rental product 30 is a CD, or text information and video information when the rental product 30 is a book.

### [Communication Line 40]

The communication line 40 can be an arbitrary preferable public line, commercial line, or dedicated line which has conventionally been known. Two or more user portable terminals 10 and the rental service server 20 can be connected by the same or separate communication lines.

The communication line 40 can connect two or more user portable terminals 10 and the rental service server 20 wirelessly or by wire. The communication line 40 can be implemented by, e.g., a public network, dedicated network, Internet, and intranet.

For example, in a rental shop, the user portable terminal 10 and rental service server 20 can be connected via a cell phone network and the Internet, and also via an intranet in the rental shop using a near-field communication means (e.g., a wireless LAN, Bluetooth, or infrared communication) incorporated in the user portable terminal 10.

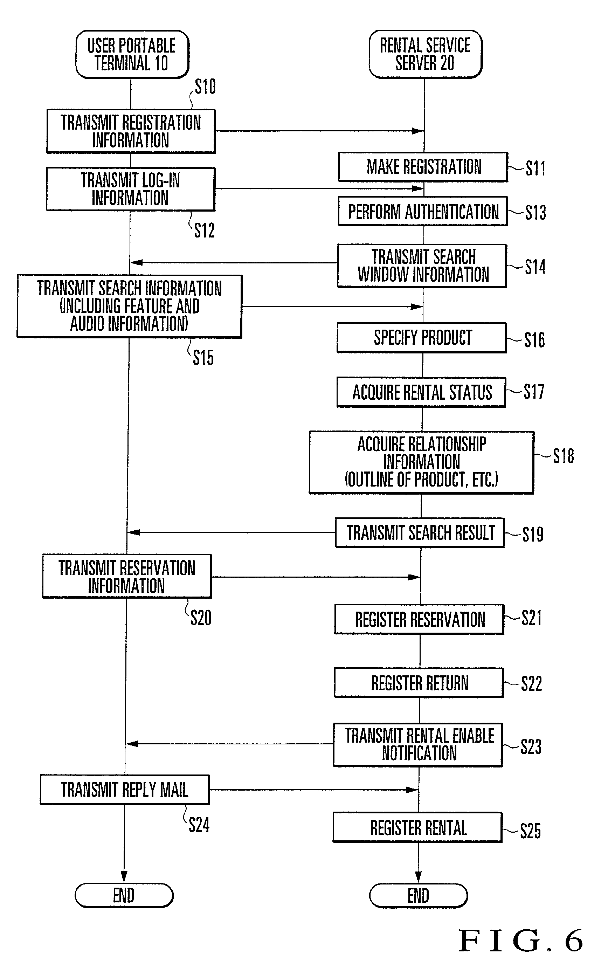

A process sequence in the rental service system according to the first embodiment will be described with reference to Fig. 6. Fig. 6 is an operation sequence chart showing a reservation rental process sequence in the rental service system according to the first embodiment.

Fig. 6 shows a process up to reservation and rental of a rental product when the user searches for it and finds that the product has been rented.

The user portable terminal 10 accesses the rental service server 20, and receives homepage information for performing user registration on a Web site which provides rental services. The user portable terminal 10 displays the homepage, and transmits, to the rental service server 20, registration information input from the user registration window (step 10).

Upon reception of the registration information from the user portable terminal 10, the rental service server 20 registers it in the member DB 20a (step 11).

The user portable terminal 10 receives log-in window information from the Web site which provides rental services. The user portable terminal 10 transmits, to the rental service server 20, log-in information input from the window (step 12). The rental service server 20 executes an authentication process by, e.g., confirming whether the received log-in information has been registered in the member DB 20a (step 13).

The rental service server 20 transmits search window information to the user portable terminal 10 (step 14). The search window information can also be transmitted in response to a request from the user portable terminal 10.

The user portable terminal 10 transmits input search information to the rental service server 20 (step 15). The search information can contain not only the product name of the rental product 30, but also part of the product name, all or some pieces of feature information of the product, or the like. For example, part of the name of an actor is used as a key, and the rental product 30 in which the actor appears can be specified.

As described above, audio information can also be used as search information. When the user rents a music CD whose product name or song name is unknown, he can search for the CD by inputting humming or the like to the user portable terminal 10.

Upon reception of the search information from the user portable terminal 10, the rental service server 20 searches the product DB 20b on the basis of the search information, and specifies a product (step 16). On the basis of the rental flag in the product DB 20b, or rental information in the rental DB 20c and reservation information in the reservation DB 20d, the rental service server 20 acquires a rental status containing information representing whether the specified product can be rented (step 17). The first embodiment assumes that the rental status is "the specified product cannot be rented".

The rental service server 20 can acquire not only the product name from the product DB 20b, but also relationship information such as the outline, image, and picture of the product, and position information of the product in a rental shop (step 18).

The rental service server 20 can also acquire the product name of another product or the like by searching the product DB 20b on the basis of the product code of another rental product 30 which is registered in the product DB 20b for each product and associated with the target product. Search of the product DB 20b is executed by a relevant product search unit 20g2 of the search unit 20g shown in Fig. 5.

With this process, when the user searches for the video tape of a movie or the like, the original book of the movie, the video tape of the stage of the original, and the like can be output together.

The rental service server 20 transmits the acquired information on the specified rental product 30 as a search result to the user portable terminal 10 (step 19).

The user portable terminal 10 outputs the received search result from the display, loudspeaker, or the like.

Since the first embodiment assumes that the target product cannot be rented, the user portable terminal 10 prompts the user to input reservation information on the product, and transmits the input reservation information to the rental service server 20 (step 20).

The rental service server 20 registers the received reservation information in the reservation DB 20d (step 21). As described above, the rental service server 20 can transmit reservation registration window information to the user portable terminal 10, receive reservation information from the user portable terminal 10, and register the reservation information in the reservation DB 20d.

If the rented product is returned, the rental service server 20 registers the due date in correspondence with the rental product 30 (step 22), and transmits a rental enable notification from the rental enable notifying unit 20k to the user portable terminal 10 (step 23). Transmission from the rental enable notifying unit 20k to the user portable terminal 10 can be achieved by transmitting a rental enable notification from the rental service server 20 to the mail address of the user and receiving it by the user portable terminal 10.

The user portable terminal 10 transmits reply mail to the rental enable notification (step 24). Then, the rental service server 20 registers rental information in correspondence with the rental product 30 on the basis of reservation information of the member who has reserved the product, which has been registered in the reservation DB 20d (step 25), and deletes the information on the reservation from the reservation information in the reservation DB 20d.

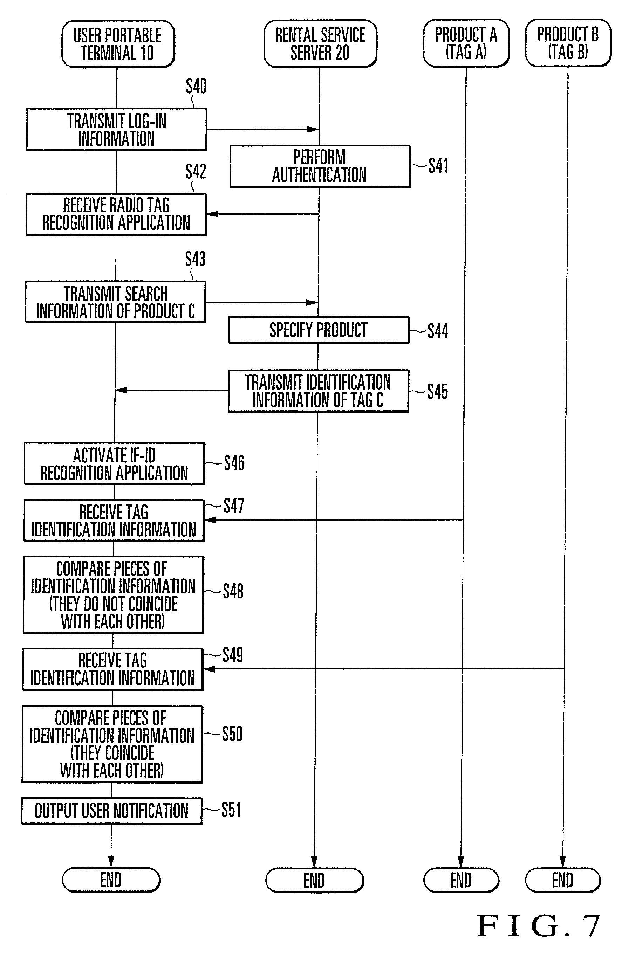

A process sequence in the rental service system according to the first embodiment will be explained with reference to Fig. 7. Fig. 7 is an operation sequence chart showing a product detection process sequence in the rental service system according to the first embodiment.

Fig. 7 shows a process of receiving an identification signal for a target product by the user portable terminal 10 from the rental service server 20, and when the user brings the user portable terminal 10 with him, moves around a rental shop, and comes close to the target product, notifying the user by the user portable terminal 10 of a message to this effect by voice or the like.

The user portable terminal 10 accesses the rental service server 20, and transmits log-in information (step 40). The rental service server 20 executes an authentication process (step 41).

The user portable terminal 10 transmits to the rental service server 20 a request to download a radio tag recognition application for recognizing a signal from the radio tag 31, and receives the application from the rental service server 20 (step 42).

The user portable terminal 10 transmits target product search information to the rental service server 20 (step 43). The rental service server 20 specifies the target product (step 44), and transmits the tag identification signal of the specified product to the user portable terminal 10 (step 45).

In the example of Fig. 7, the user wants to search for rental product B in a rental shop. The user portable terminal 10 transmits the search condition of input product B to the rental service server 20, receives the tag identification signal of product B from the rental service server 20, and stores the tag identification signal.

The user inputs a radio tag recognition application activation request to the user portable terminal 10, and the user portable terminal 10 activates the application (step 46). After the radio tag recognition application becomes active, the user portable terminal 10 waits for an identification signal from the radio tag 31 added to the rental product 30. The user brings the user portable terminal 10 in which the radio tag recognition application is active, and moves around the rental shop.

If the user portable terminal 10 receives an identification signal from the radio tag 31 added to product A (step 47), it compares whether the identification signal coincides with the tag identification signal of product B that has been received in advance from the rental service server 20 (step 48). In this case, the identification signals do not coincide with each other, and the user portable terminal 10 waits for the next identification signal.

The user portable terminal 10 receives an identification signal from the radio tag 31 added to product B (step 49), and executes an identification signal comparison process (step 50). In this case, the identification signals coincide with each other, and the user portable terminal 10 outputs information representing that target product B is near the user (step 51).

As described above, according to the rental service system in the first embodiment, a rental product can be specified on the basis of not only identification information of the rental product but also its feature information and audio information. The user can easily narrow rental products to a target one, and easily rent or reserve it.

In searching for a rental product, the user can display other products relevant to a searched rental product as search results. The user can, therefore, obtain a variety of information on the target rental product, and his potential interests can also be aroused.

The user receives a predetermined signal for a target rental product from the rental service server and stores the signal in the user terminal. When the user visits a rental shop and passes by the rental product while bringing the user terminal with him, the user terminal can notify the user that the rental product is near him.

Hence, the user can easily find out the target rental product in the rental shop.

The user terminal can photograph, e.g., a 2D code added to a rental product with a camera, analyze the 2D code, transmit it to the rental service server, and receive the preview of the movie or the like from the rental service server. The user can examine rental products as if he browsed, and can select a product to be rented.

Music information or video information from the rental service server to the user terminal can be distributed by downloading or streaming degraded information. This can suppress the possibility of secondary use of the distributed music information or video information on the user terminal side.

### [Second Embodiment]

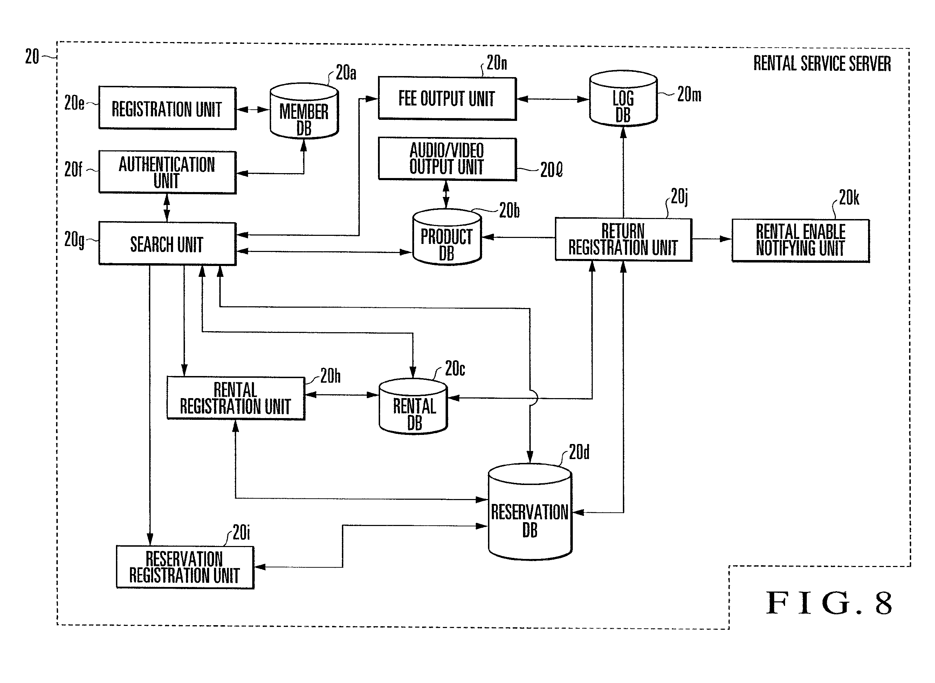

The second embodiment of the present invention will be described with reference to Fig. 8.

The second embodiment is different from the first embodiment in that when a rental service server 20 transmits a search result to a user portable terminal 10, it calculates fee information containing the discount of a searched rental product, and transmits the fee information to the user portable terminal 10. More specifically, the rental service server 20 in the second embodiment comprises a log DB 20m and fee output unit 20n in addition to the configuration of the rental service server 20 in the first embodiment shown in Fig. 3. The remaining configuration is the same as that in the first embodiment.

### [Log DB 20m]

The log DB 20m is a storage unit (log information storage unit) which stores rental log information. The log DB 20m can hold a product code, the member ID of a renter, a rental period (start date and end date), and the like. Data can be registered in the log DB 20m by a return registration unit 20j, and the registration timing is arbitrary. For example, simultaneously when the return registration unit 20j registers return of a rental product 30 in a rental DB 20c, it can record rental log information of the rental product 30 in the log DB 20m on the basis of rental information of the returned rental product 30. Upon the lapse of a predetermined period after recording in the log DB 20m, the rental information of the rental product 30 can be deleted from the rental DB 20c.

### [Fee Output Unit 20n]

In searching for the rental product 30, the fee output unit 20n calculates the discount of the rental product 30 specified by the search unit 20g on the basis of information stored in the log DB 20m in response to a request from a search unit 20g, and outputs the discount to the search unit 20g. The search unit 20g transmits the discount to the user portable terminal 10.

For example, the fee output unit 20n calculates a predetermined discount for a rental product for which a predetermined period (e.g., half a year) has elapsed after the first rental start date of the product in the log DB 20m. The discount can also be calculated when the rental count, the number of days of rental, or the like exceeds a predetermined value. Further, the discount can also be calculated when the rental count in a predetermined period drops to 30% or less of the peak count.

As described above, according to the rental service system in the second embodiment, if a searched rental product can be discounted, a discount or the like can be displayed on the user terminal together with a search result.

When a searched rental product is discounted, the user can be prompted to rent it.

### [Third Embodiment]

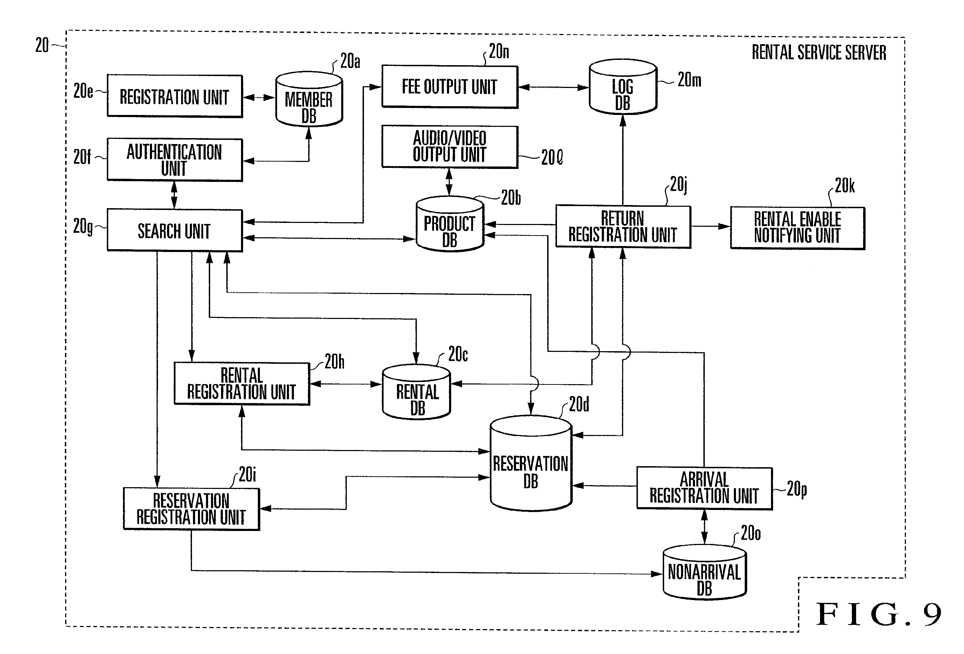

The third embodiment of the present invention will be described with reference to Fig. 9.

The third embodiment is different from the second embodiment in that rental of a product which has not arrived or has not been released can be reserved. More specifically, a rental service server 20 in the third embodiment comprises a nonarrival DB 20o and arrival registration unit 20p in addition to the configuration in the second embodiment. The remaining configuration is the same as that in the second embodiment.

### [Nonarrival DB 20o]

The nonarrival DB 20o is a storage unit which stores rental products that have not been stored in a product DB 20b because they have not arrived or have not been released. Data items in the nonarrival DB 20o are, e.g., all or some of various types of product information described in the description of the product DB 20b, and the member ID of a rental applicant.

### [Arrival Registration Unit 20p]

The arrival registration unit 20p extracts unarrived-product information from the nonarrival DB 20o, and displays the extracted information. If arrival information is input for the displayed unarrived-product information, the arrival registration unit 20p stores the unarrived-product information as rental product information in the product DB 20b. In this case, arrival information is, e.g., information which is held in the items of the product DB 20b for an arrived product and is not stored in the nonarrival DB 20o.

If arrival information is input for the unarrived-product information, the arrival registration unit 20p stores corresponding reservation information in a reservation DB 20d. In this case, an arrival date can be input as arrival information and used as the start date of the reservation period. Another item can also be input as arrival information, or can be automatically set on the basis of a predetermined criterion.

According to the third embodiment, in addition to the function described in the first embodiment, a reservation registration unit 20i functions as a nonarrival registration means for, when no rental product can be specified by the search unit, transmitting unarrived-product registration window information to a user portable terminal 10, and storing, in the nonarrival DB 20o, unarrived-product information which is input to the unarrived-product registration window and transmitted from the user portable terminal 10.

As described above, according to the rental service system in the third embodiment, the rental service server can register in advance unarrived-product information capable of automatically reserving upon arrival a product which has not been registered as a rental product in the storage unit, for example, a product which has been released but has not arrived, a product whose planned release date is far ahead, or a product whose sales schedule has not been decided yet.

The user can request a rental product of a rental shop, and the rental shop can grasp user's needs and reflect them on a selection of rental products.

### [Fourth Embodiment]

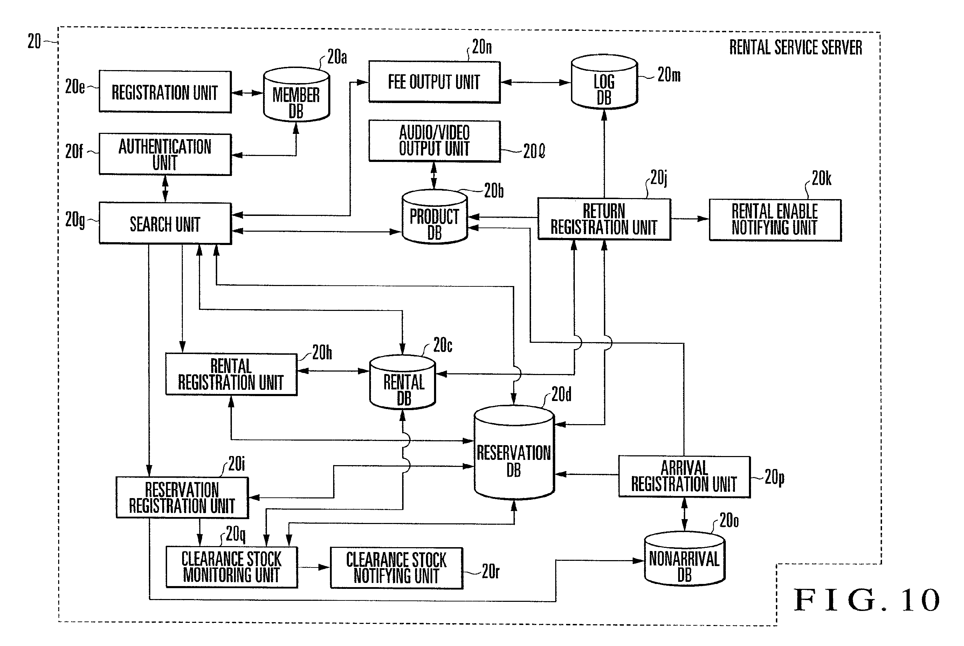

The fourth embodiment of the present invention will be described with reference to Fig. 10.

The fourth embodiment is different from the third embodiment in that a rental product which cannot be rented on a normal rental criterion can be rented to increase the turnover of products. More specifically, a rental service server 20 in the fourth embodiment comprises a clearance stock monitoring unit 20q and clearance stock notifying unit 20r in addition to the configuration in the third embodiment. The remaining configuration is the same as that in the third embodiment.

### [Clearance Stock Monitoring Unit 20q]

The clearance stock monitoring unit 20q monitors a rental DB 20c and reservation DB 20d, and detects a clearance stock which cannot be rented on a normal criterion. The clearance stock can be detected as follows.

More specifically, when reservation information is registered in the reservation DB 20d, the clearance stock monitoring unit 20q searches the rental DB 20c on the basis of a product code in the reservation information. The clearance stock monitoring unit 20q compares a planned due date in the obtained rental information with a desired rental start date in the reservation information, and confirms whether a period of one day or more is present between the planned due date and the desired rental start date.

If the period of one day or more (this period will also be referred to as a clearance stock period) is present, the clearance stock monitoring unit 20q preferably confirms whether the clearance stock period is shorter than a period based on the rental form corresponding to the rental type in the reservation information, e.g., shorter than three days for a rental form of three days and two nights. If the clearance stock period is shorter than the period based on the rental form corresponding to the rental type, the product cannot be rented on a normal rental criterion. Thus, the clearance stock monitoring unit 20q outputs the product code of the rental product in the clearance stock to the clearance stock notifying unit 20r.

When a due date is registered in the rental DB 20c, the clearance stock monitoring unit 20q searches the reservation DB 20d on the basis of a product code in the rental information. The clearance stock monitoring unit 20q compares a desired rental start date in the obtained reservation information with a due date registered in the rental information, and confirms whether a period of one day or more is present between the due date and the desired rental start date. If the clearance stock period is present and the product cannot be rented on a normal rental criterion, the clearance stock monitoring unit 20q can output the product code of the rental product in the clearance stock to the clearance stock notifying unit 20r, similar to the above case.

### [Clearance Stock Notifying Unit 20r]

Upon reception of a product code from the clearance stock monitoring unit 20q, the clearance stock notifying unit 20r transmits, to a user portable terminal 10 which has registered reservation of a rental product corresponding to the product code, a clearance stock notification representing that the rental product will be rented at a reduced rental fee. The clearance stock notification can also be transmitted to the user portable terminals 10 of all users.

As described above, according to the rental service system in the fourth embodiment, when rental of a rented product is reserved and a clearance stock period is present between the due date and a desired rental start date, the user portable terminal 10 can be notified that the rental product will be rented at a reduced rental fee during the clearance stock period.

The rental shop can prompt a member who reserves a rental product to rent in the clearance stock period the rental product which has been returned earlier than expected, thereby increasing the rental efficiency.

### [Fifth Embodiment]

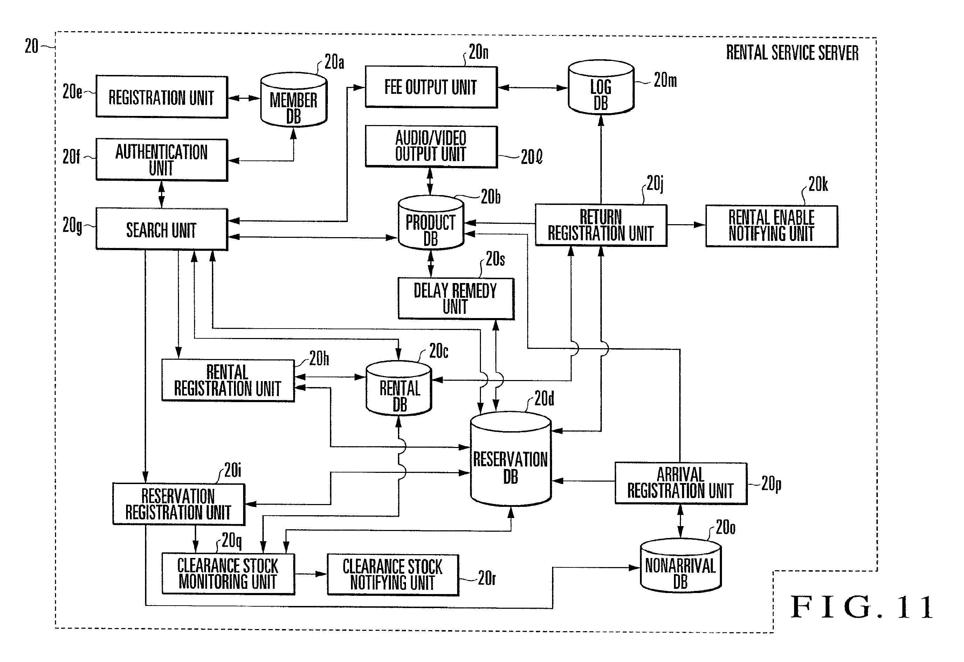

The fifth embodiment of the present invention will be described with reference to Fig. 11.

The fifth embodiment is different from the fourth embodiment in that demerits to the member who has reserved a product can be reduced when return of a reserved rental product delays. More specifically, a rental service server 20 in the fifth embodiment comprises a delay remedy unit 20s in addition to the configuration in the fourth embodiment. The remaining configuration is the same as that in the fourth embodiment.

### [Delay Remedy Unit 20s]

The delay remedy unit 20s extracts reservation information for which return of a rental product delays and the product cannot be rented to a member who has reserved the product as planned, and executes various remedy processes for the reservation information.

The delay remedy unit 20s extracts reservation information in which the desired rental start date is the current date from a reservation DB 20d at, e.g., 0:00 a.m. in a date & time process. The delay remedy unit 20s searches for rental information on the basis of a product code in the extracted reservation information, and confirms whether a due date has been registered in rental information corresponding to the product code.

If no due date has been registered and the product codes of rental products as the second and subsequent choices are registered, the delay remedy unit 20s confirms from a rental DB 20c and the reservation DB 20d whether the rental products as the second and subsequent choices can be rented. At this time, the delay remedy unit 20s searches the rental DB 20c and reservation DB 20d sequentially for the rental products serving as the second and subsequent choices on the basis of the product codes of the rental products, and confirms whether these products have not been rented, are not reserved in the future, and can be rented.

If the rental products serving as the second and subsequent choices can be rented, the delay remedy unit 20s notifies the user portable terminal 10 of the member who has reserved the target product but cannot rent it as planned, that he can rent the rental products serving as the second and subsequent choices. It is preferable to rent the rental products serving as the second and subsequent choices without a fee or at a reduced rental fee, and notify the user portable terminal 10 of a message to this effect.

When the delay remedy process is performed, an item for the product codes of rental products serving as the second and subsequent choices is desirably set in the reservation DB 20d to register the product codes in reservation.

When rental to the member who has reserved the product cannot be done as planned, the delay remedy unit 20s preferably transmits alternate product information to the user portable terminal 10.

More specifically, similar to the above-described case, when no due date is registered in the rental DB 20c for a reserved product even on a desired rental start date, the delay remedy unit 20s can automatically search for a relevant product on the basis of a product code in the reservation DB 20d, similar to a search unit 20g, and transmit information on the obtained rental product to the user portable terminal 10 of a member who has reserved the target product but cannot rent it as planned. Also in this case, the delay remedy unit 20s may transmit a message of free rental.

As described above, according to the rental service system in the fifth embodiment, when the user cannot rent a reserved rental product on a desired rental start date because the previous renter delays return or damages the rental product, rental of rental products serving as the second and subsequent choices instead of the reserved rental product can be proposed. The rental shop can discount or set free rental products serving as the second and subsequent choices.

The rental shop can, therefore, reduce demerits to the member who has reserved the product owing to delay of return or the like, improving customer services.

### [Sixth Embodiment]

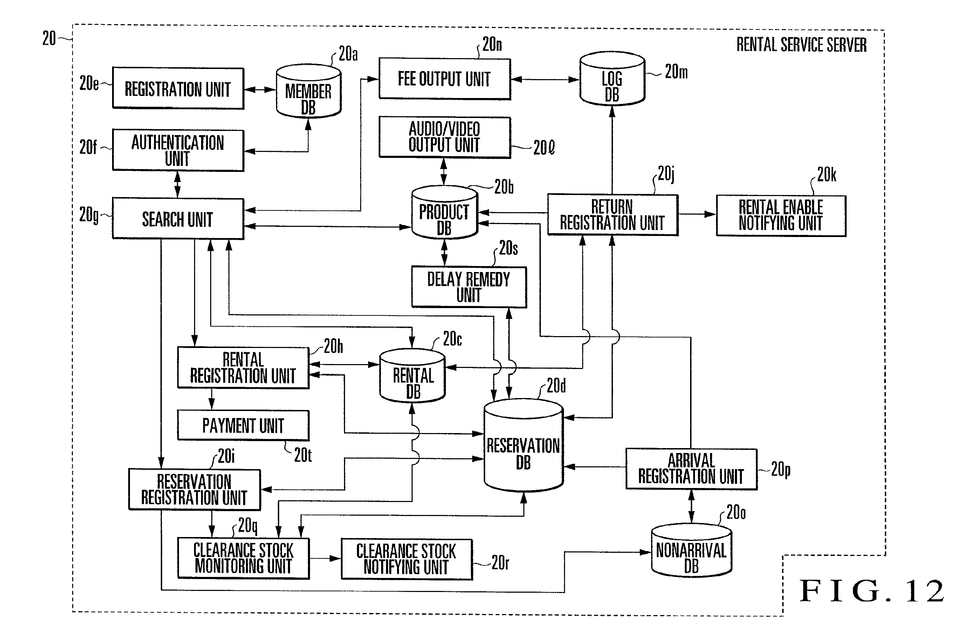

The sixth embodiment of the present invention will be described with reference to Fig. 12.

The sixth embodiment is different from the fifth embodiment in that the payment can be automatically made by a rental service server 20 on the basis of information from a user portable terminal 10. More specifically, the rental service server 20 in the sixth embodiment comprises a payment unit 20t in addition to the configuration in the fifth embodiment. The remaining configuration is the same as that in the fifth embodiment.

### [Payment Unit 20t]

The payment unit 20t executes a rental fee payment process. There are roughly two methods: a method of automatically executing the rental fee payment process when rental information is registered via a communication line 40, and a method of executing the process in a shop on the basis of information from the user portable terminal 10 having the FeliCa® function or the like.

In the former case, a rental registration unit 20h receives a reply from the user portable terminal 10 to a rental enable notification, and registers rental information corresponding to the rental enable notification in a rental DB 20c. Then, the payment unit 20t searches a member DB 20a on the basis of the member ID of the member who has rented the product, acquires a credit card number or the like, and executes the payment process. The credit card number or the like can also be transmitted from the user portable terminal 10 to the rental service server 20 at the same time as a reply to the rental enable notification.

In the latter case, when the user receives a reserved rental product 30 from a shop, he confirms rental information and makes payment by electronic money using the user portable terminal 10.

At this time, the rental registration unit 20h receives information (e.g., member ID) for specifying reservation information from the user portable terminal 10. Then, the rental registration unit 20h searches the reservation DB 20d on the basis of the member ID or the like, confirms that reservation information by the member exists, and acquires the reservation information. By displaying the reservation information, the rental shop can confirm that the user has reserved the product.

The rental registration unit 20h also searches the rental DB 20c on the basis of a product code in the reservation information, and confirms that a due date has been registered in rental information of a corresponding rental product 30. The rental shop can, therefore, confirm that the product reserved by the user has been returned and can be rented.

The rental registration unit 20h registers rental information of the user in the rental DB 20c, and the payment unit 20t wirelessly transmits the rental fee of rental to the user portable terminal 10. Upon reception of the rental fee, the user portable terminal 10 compares the rental fee with the outstanding balance of electronic money in the user portable terminal 10. If the outstanding balance of electronic money is higher than the rental fee, the user portable terminal 10 subtracts the rental fee from the outstanding balance of electronic money, and notifies the rental service server 20 that payment can be made. Upon reception of the message that payment can be made, the payment unit 20t adds the rental fee to the outstanding balance of electronic money in the rental service server 20.

The payment process can be executed using a user portable terminal 10 having an RF-ID reader/writer function.

Even a user portable terminal 10 having no reader/writer function but having a direct connection terminal to an information processing apparatus can execute the latter payment process by directly connecting the user portable terminal 10 to the rental service server 20. Note that this process requires satisfactory security management using various encryption techniques for transmission/reception data.

As described above, according to the rental service system in the sixth embodiment, a rental fee can be automatically paid on the basis of a reply from the user to a rental enable notification. The rental fee can be paid by electronic money in a shop or the like.

This can simplify the rental fee payment procedure.

### [Seventh Embodiment]

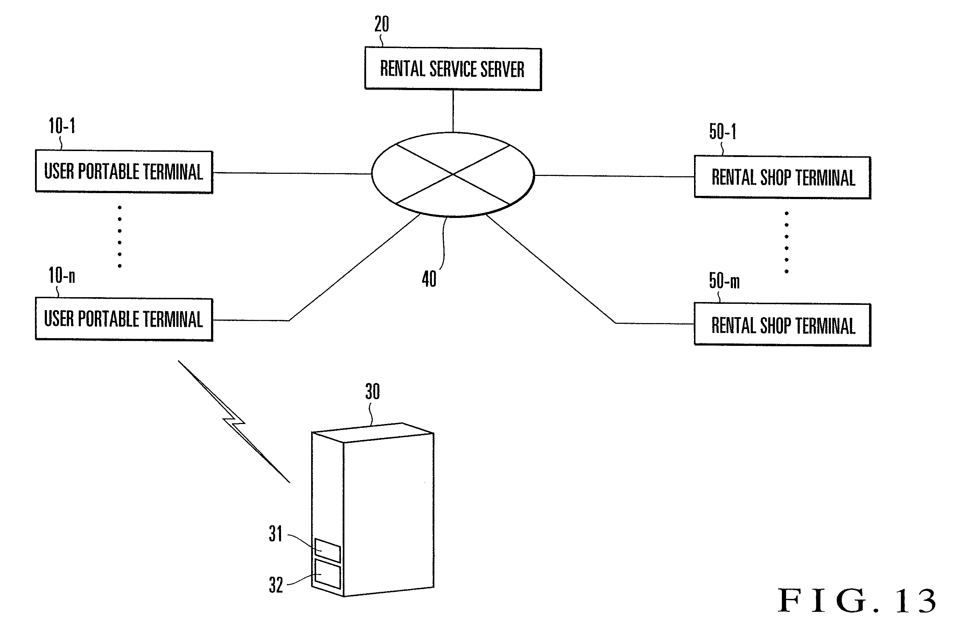

The seventh embodiment of the present invention will be described with reference to Figs. 13 to 15.

The seventh embodiment is different from the sixth embodiment in that a plurality of rental shops are managed by a rental service server 20. The remaining configuration is the same as that in the sixth embodiment.

As shown in Fig. 13, a rental service system in the seventh embodiment comprises rental shop terminals 50 (50-1 to 50-m) in addition to the configuration in the sixth embodiment.

### [Rental Shop Terminal 50]

The rental shop terminal 50 is an information processing apparatus used in a rental shop, and can be implemented by, e.g., a personal computer. The rental shop terminal 50 can access the rental service server 20 via a communication line 40, and receive and display information on the rental shop that is managed in the rental service server 20.

In rental registration, the rental shop terminal 50 receives rental information from the rental service server 20 and displays it. The rental shop can rent a product to the user by referring to the rental information.

When a rental product 30 is returned, the rental shop terminal 50 transmits the product code of the rental product 30 and information (e.g., due date) representing that the rental product 30 has been returned, to the rental service server 20 on the basis of input of information on the rental shop side representing that the rental product 30 has been returned. In response to this, the rental service server 20 can register return in a rental DB 20c.

In reservation registration, the rental shop terminal 50 can also receive reservation information from the rental service server 20 and display it.

### [Search Unit 20g]

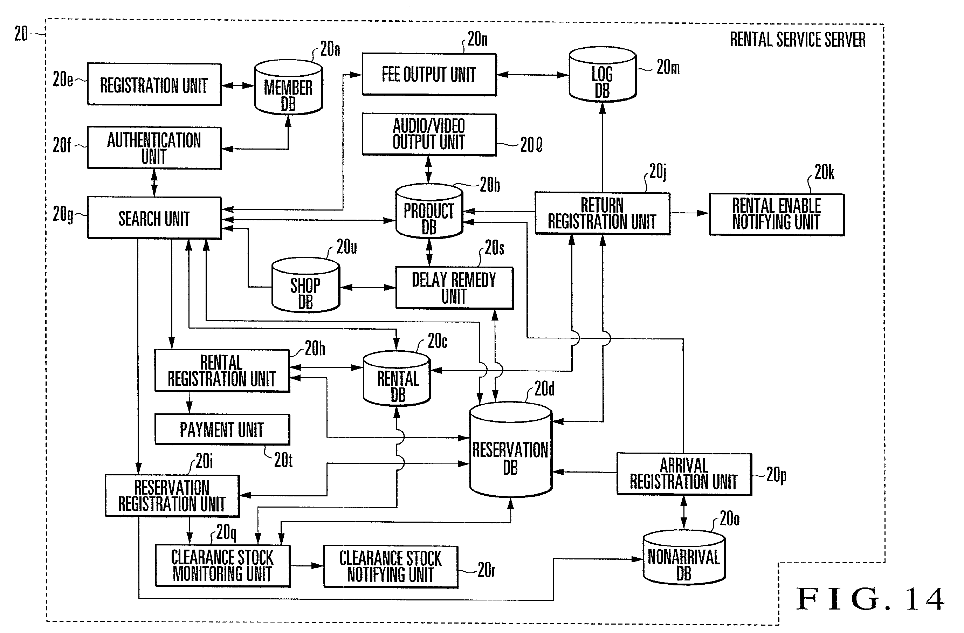

In the seventh embodiment, a search unit 20g of the rental service server 20 shown in Fig. 14 creates rental shop display window information as shown in

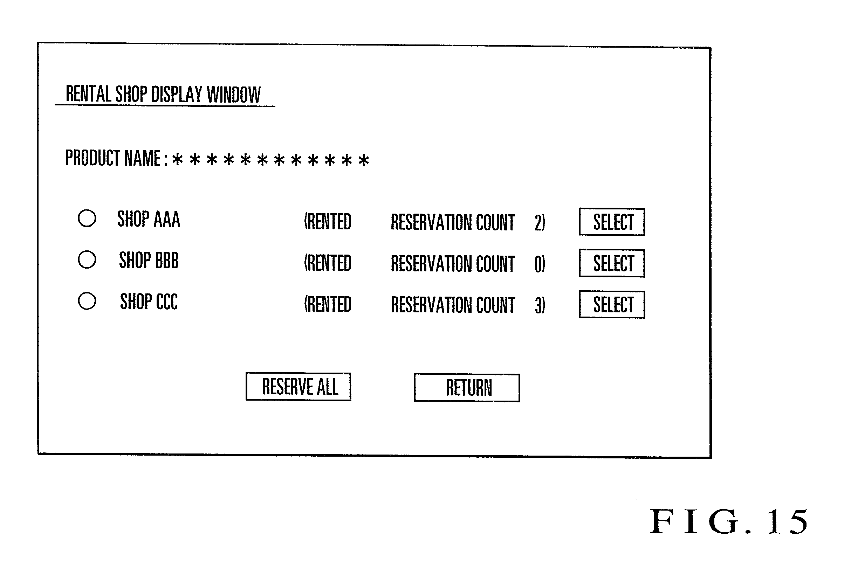

Fig. 15 in response to a product search request from a user portable terminal 10, and transmits the information to the user portable terminal 10. The user portable terminal 10 receives the rental shop display window information and displays the window.

In the example of Fig. 15, the search unit 20g specifies the rental product 30 on the basis of search information from the user portable terminal 10, and outputs to the rental shop display window a rental shop which holds the rental product 30, the rental status of the rental product 30, and the like.

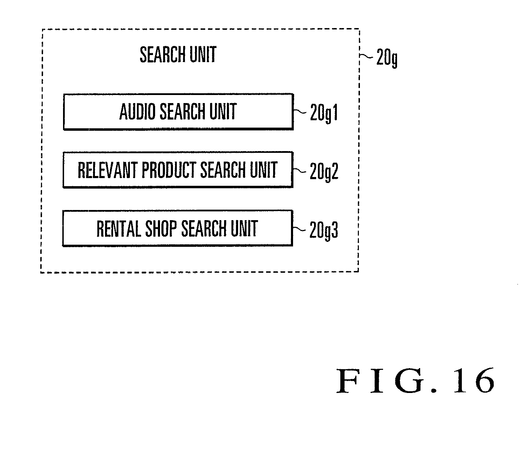

This process is executed by a rental shop search unit 20g3 of the search unit 20g shown in Fig. 16.

Although the concrete process method includes various methods, the rental service server 20 identifies a rental shop by a shop code, creates a product information table, rental information table, and reservation information table for each rental shop, and stores these tables in a product DB 20b, the rental DB 20c, and a reservation DB 20d, respectively. The product DB 20b can hold various types of product information and the like common to shops in one independent table.

At this time, the search unit 20g can search the product DB 20b on the basis of the product code of the specified rental product 30, acquire the shop code of a rental shop stocked with the rental product 30, search the rental DB 20c and reservation DB 20d on the basis of the shop code, and output detailed information on the rental status.

### [Shop DB 20u]

A shop DB 20u is a storage unit which stores various types of information on a rental shop. The shop DB 20u can store a shop code, shop name, shop address, mail address, the address of an information processing apparatus in the shop, and the like.

The search unit 20g searches the shop DB 20u on the basis of the shop code, and can display the name of the rental shop in the rental shop display window shown in Fig. 15.

### [Reservation Registration Unit 20i]

A reservation registration unit 20i according to the seventh embodiment executes the above-described reservation registration process for all rental shops, or one or a plurality of specified rental shops when a batch reservation button as shown in Fig. 15 is clicked. The user can easily make reservations in a plurality of rental shops.

A batch reservation flag for identifying reservations by batch reservation is preferably set in the reservation DB 20d. When rental information is registered on the basis of some of reservations by batch reservation, all pieces of reservation information in other rental shops by the same user for the same product are preferably automatically canceled.

### [Delay Remedy Unit 20s]

In the seventh embodiment, when a rental product cannot be rented to a member who has reserved a product as planned because return of the rental product delays, a delay remedy unit 20s can transmit, to the user portable terminal 10, information representing whether the rental product can be rented from another rental shop.

For example, the delay remedy unit 20s searches the rental DB 20c and reservation DB 20d of another rental shop on the basis of a product code in reservation information for which the product cannot be rented as planned. On the basis of the rental information and reservation information, the delay remedy unit 20s can specify the shop code of another rental shop capable of renting the rental product. The delay remedy unit 20s can search the shop DB 20u on the basis of the specified shop code, and transmit information on the rental shop to the user portable terminal 10.

The states of rental information and reservation information when rental is possible can be defined in various ways. For example, rental is possible when rental information representing that a rental product has been rented is registered and no reservation information is registered.

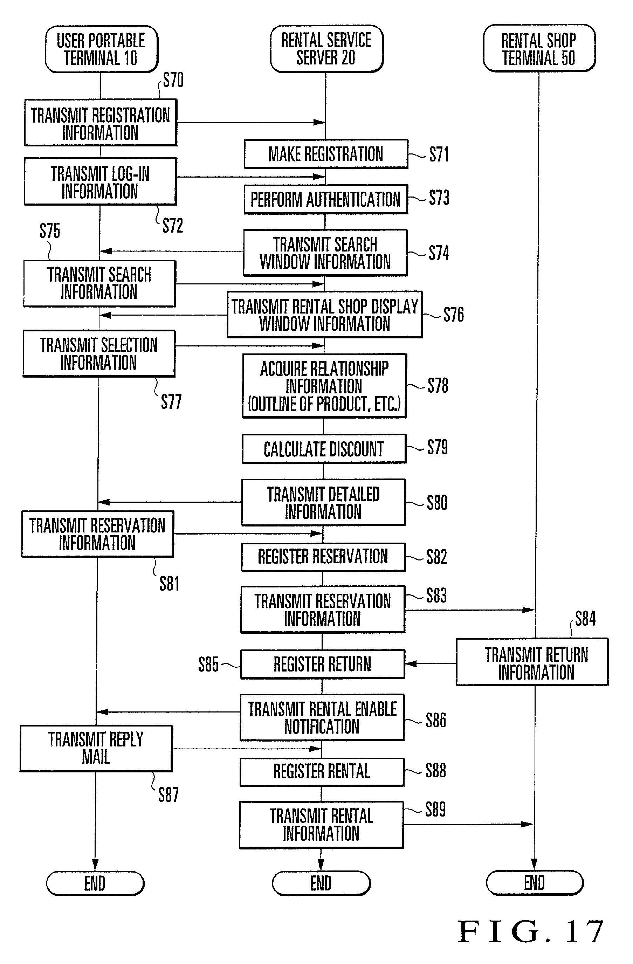

A process sequence in the rental service system according to the seventh embodiment will be described with reference to Fig. 17.

Operations (steps 70 to 75) of the user portable terminal 10 from operation of transmitting registration information to the rental service server 20 up to operation of transmitting search information to the rental service server 20 are the same as those (steps 10 to 15) described in the first embodiment.

Similar to step 16 in the first embodiment, the rental service server 20 specifies the rental product 30, specifies a rental shop which holds the product, creates rental shop display window information for displaying the rental shop, and transmits the information to the user portable terminal 10 (step 76).

Upon reception of a rental shop selection input by the user, the user portable terminal 10 transmits the selection information to the rental service server 20 (step 77). In the following description, the rental product 30 has been rented from the rental shop selected by the user.

Similar to step 18 in the first embodiment, the rental service server 20 acquires relationship information on the specified rental product 30 (step 78). Similar to the second embodiment, the rental service server 20 calculates a discount (step 79), and transmits these pieces of detailed information to the user portable terminal 10 (step 80).

When the user reserves the rental product 30, he uses the user portable terminal 10 to receive reservation registration window information from the rental service server 20. The user portable terminal 10 transmits reservation information input from the reservation registration window to the rental service server 20 (step 81).

Upon reception of the reservation information from the user portable terminal 10, the rental service server 20 registers the information in the reservation DB 20d (step 82), and transmits the reservation information to the corresponding rental shop terminal 50 (step 83).

If the rental product 30 is returned, the rental shop terminal 50 transmits the input return information to the rental service server 20 (step 84). The return information can contain the product code of the returned rental product 30, the due date, and the like.

Upon reception of the return information, the rental service server 20 searches the rental DB 20c on the basis of the product code, and registers the due date in corresponding rental information (step 85).

After the rental service server 20 registers the due date in the rental information, it searches the reservation DB 20d on the basis of a product code in the rental information, and specifies the member ID of the member who has reserved the rental product 30. The rental service server 20 searches the member DB 20a on the basis of the member ID, acquires an electronic mail address, and transmits a rental enable notification to the user portable terminal 10 (step 86).

If no due date is registered in the rental DB 20c for the rental product 30 till a desired rental start date in the reservation information, the delay remedy unit 20s can transmit, to the user portable terminal 10, information representing whether the rental product 30 can be rented from another rental shop.

The user portable terminal 10 transmits reply mail to the rental enable notification to the rental service server 20 (step 87). Then, the rental service server 20 registers rental information for the rental enable notification in the rental DB 20c (step 88), and transmits the rental information to the rental shop terminal 50 (step 89).

As described above, the rental service system according to the eighth embodiment can display, on the user portable terminal 10, information on a rental shop having a rental product which satisfies a search condition. At this time, the rental status of the product in each rental shop can be displayed to make reservations in some or all rental shops at once. If the member who has reserved a product cannot rent the reserved product due to delay of return by a previous renter or the like, another rental shop which can rent the product can also be transmitted to the user terminal.

The user can easily grasp rental shops which can rent a target product, and need not make rental reservations in a plurality of rental shops. Moreover, demerits to the member who has reserved the product owing to delay of return or the like can be minimized.

### [Eighth Embodiment]

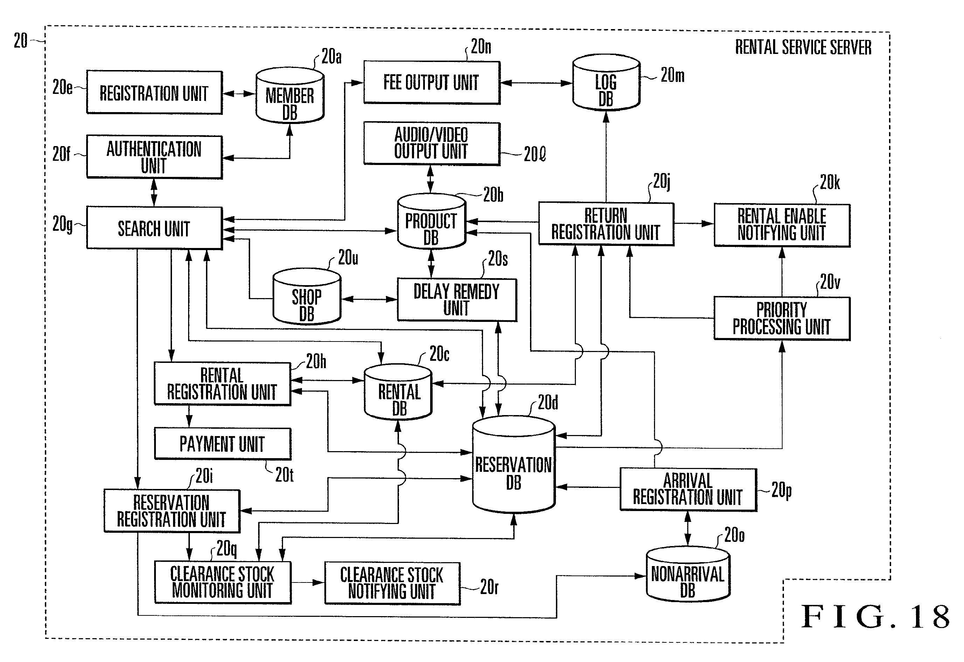

The eighth embodiment of the present invention will be described with reference to Fig. 18.

The eighth embodiment is different from the seventh embodiment in that rental priority can be adjusted when a given user reserves identical rental products 30 in a plurality of rental shops. More specifically, a rental service server 20 according to the eighth embodiment comprises a priority processing unit 20v in addition to the configuration in the seventh embodiment. The remaining configuration is the same as that in the seventh embodiment.

### [Priority Processing Unit 20v]

The priority processing unit 20v monitors reservation registrations in a plurality of rental shops for the identical rental products 30 by a given user, and controls rental enable notification transmission requests for these pieces of reservation information.

More specifically, the priority processing unit 20v outputs, to a return registration unit 20j, pieces of reservation information in a plurality of rental shops for the identical rental products 30 by a given user. For the pieces of reservation information, the return registration unit 20j does not output the product code of a returned rental product to a rental enable notifying unit 20k.

For these reservations, the priority processing unit 20v monitors whether a plurality of return registrations are made within a predetermined time. For example, the priority processing unit 20v monitors whether a return registration is made for one of reservations during a period of 0:00 a.m. to 5:00 p.m. or within several hours after the first return registration for the reservations.

When a plurality of return registrations are made within a predetermined time and another user makes only one reservation for the identical rental product 30, priority is given to the reservation by the latter user, and the priority processing unit 20v outputs, to the rental enable notifying unit 20k, a rental enable notification transmission request for reservation information of the latter user.

For a plurality of members who have reserved products, the priority processing unit 20v outputs, to the rental enable notifying unit 20k, a rental enable notification transmission request for reservation information for which return registration is made and which is different from the reservation for which priority is given to the latter user.

Hence, even if a plurality of reservations are made, a disadvantage to only one reservation by another user can be prevented.

The priority processing unit 20v can limit the above-mentioned priority process for another user in a plurality of reservations to only a specific case.

For example, assume that user A reserves rental product X in shops A and B, then user B reserves rental product X in only shop A, rental products X are returned to shops A and B within a predetermined time, and the above priority process allows user B to rent rental product X from shop A and user A to rent rental product X from shop B. In this case, if the house of user A is close to shop A and apart from shop B, user A suffers a loss in comparison with the reservation by the latter member B who has reserved the product though user A is the former member who has reserved the product.

To prevent this, when a plurality of return registrations are made within a predetermined time for reservations of the identical rental products 30 in a plurality of rental shops by a given user, and another user subsequently reserves the rental product 30 in one of the rental shops, the priority processing unit 20v acquires a shop code in the latter reservation information, and acquires address X of the rental shop on the basis of the shop code. Similarly, the priority processing unit 20v acquires the addresses of other rental shops which receive return registrations, and acquires the address of the former user from a member DB 20a on the basis of the member ID.

When the address of the former user is closest to address X among the addresses of the rental shops which receive return registrations, the priority processing unit 20v gives priority to the former user who has made reservations first, and outputs a rental enable notification transmission request for the rental shop at address X to the rental enable notifying unit 20k.

Not only the address of a user but also the address of a user's company can be held in the member DB 20a. For a rental shop close to the user's company, the priority processing unit 20v gives priority to the former member who has reserved the product Further, time or the like can also be added to perform more detailed adjustment.

Note that the present invention does not particularly limit, e.g., how to transmit a rental enable notification about a later reservation among a plurality of reservations for identical products or a reservation whose priority is lowered by the above-described priority process.

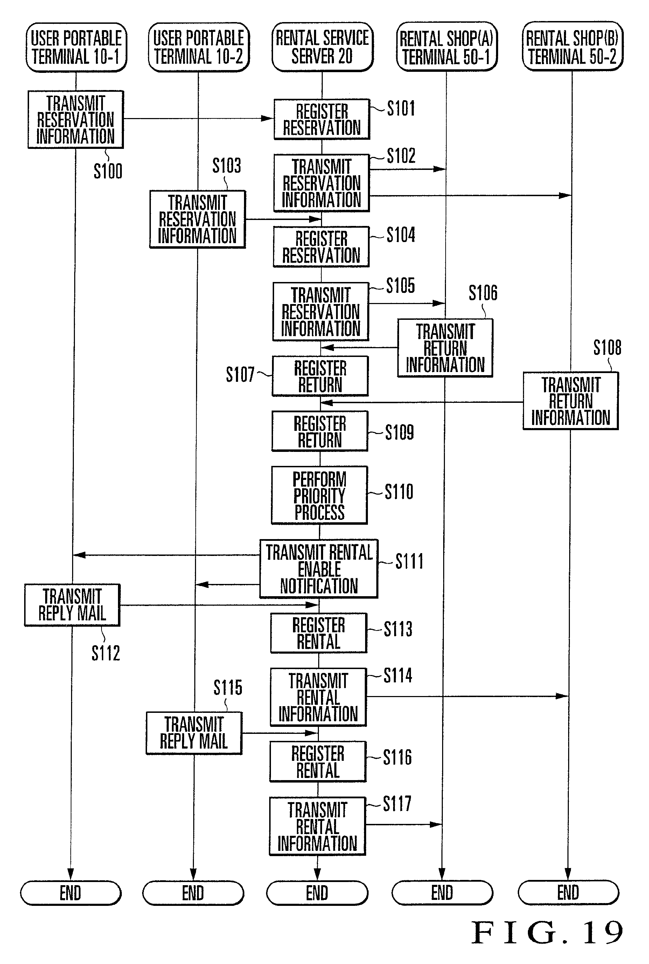

A process sequence in a rental service system according to the eighth embodiment will be described with reference to Fig. 19.

A user portable terminal 10-1 transmits pieces of reservation information on rental shop A having the rental shop terminal 50-1 and rental shop B having the rental shop terminal 50-2 to the rental service server 20 (step 100). The rental service server 20 registers the received pieces of reservation information in a reservation DB 20d (step 101). The rental service server 20 transmits the pieces of reservation information to the corresponding rental shop terminals 50 (step 102).

The user portable terminal 10-2 transmits one reservation information on rental shop A having the rental shop terminal 50-1 to the rental service server 20 (step 103). The rental service server 20 registers the received reservation information in the reservation DB 20d (step 104). The rental service server 20 transmits the reservation information to the rental shop terminal 50-1 (step 105).

If the reserved rental product 30 is returned to rental shop A, the rental shop terminal 50-1 transmits input return information to the rental service server 20 (step 106). The rental service server 20 registers return in the rental DB 20c (step 107). In this case, since the rental product 30 is subjected to a plurality of reservations, the rental service server 20 does not quickly transmit any rental enable notification to the user portable terminal 10-1, waits for a predetermined time, and monitors whether return information is transmitted from the rental shop terminal 50 of another rental shop. Similarly, the rental service server 20 does not quickly transmit any rental enable notification to the user portable terminal 10-2.

If the reserved rental product 30 is returned to rental shop B within a predetermined time, the rental shop terminal 50-2 transmits input return information to the rental service server 20 (step 108). The rental service server 20 registers return in the rental DB 20c (step 109).

Upon the lapse of a predetermined time, the rental service server 20 executes a priority process (step 110).

At this time, the rental service server 20 compares the address of the former member who has reserved the product and uses the user portable terminal 10-1, the address of rental shop A, and that of rental shop B.

If the address of the former member is closer to that of rental shop A than that of rental shop B, the rental service server 20 does not give priority to the latter member who has reserved the same product in rental shop A. If the address of the former member is closer to that of rental shop B than that of rental shop A, the rental service server 20 gives priority to the latter member who has reserved the same product in rental shop A.

Fig. 19 shows the latter example, and assumes that priority is given to the reservation to rental shop A by the latter member who has reserved the product and uses the user portable terminal 10-2.

The rental service server 20 transmits a rental enable notification about rental shop B to the user portable terminal 10-1, and a rental enable notification about rental shop A to the user portable terminal 10-2 (step 111).

In response to the rental enable notification, the user portable terminal 10-1 transmits reply mail to the rental service server 20 (step 112). The rental service server 20 registers rental (step 113), and transmits the rental information to the rental shop terminal 50-2 in rental shop B (step 114).

The user portable terminal 10-2 transmits reply mail to the rental service server 20 (step 115). The rental service server 20 registers rental (step 116), and transmits the rental information to the rental shop terminal 50-1 in rental shop A (step 117).

As described above, according to the rental service system in the eighth embodiment, when a given user reserves identical rental products in a plurality of rental shops, the products are returned to a plurality of rental shops within a predetermined time and can be rented, and another user reserves a rental product identical to these products in one of the rental shops, the reservation by the latter user is made later than the reservations by the former user, but priority is given to the latter member for the rental shop, and a rental enable notification can be transmitted. This priority process is controlled on the basis of a predetermined condition such as the address so that the former member does not suffer any loss.

Thus, when reservations in a plurality of rental shops can be made, the reservations can be properly adjusted to enhance fairness between users.

### [Ninth Embodiment]

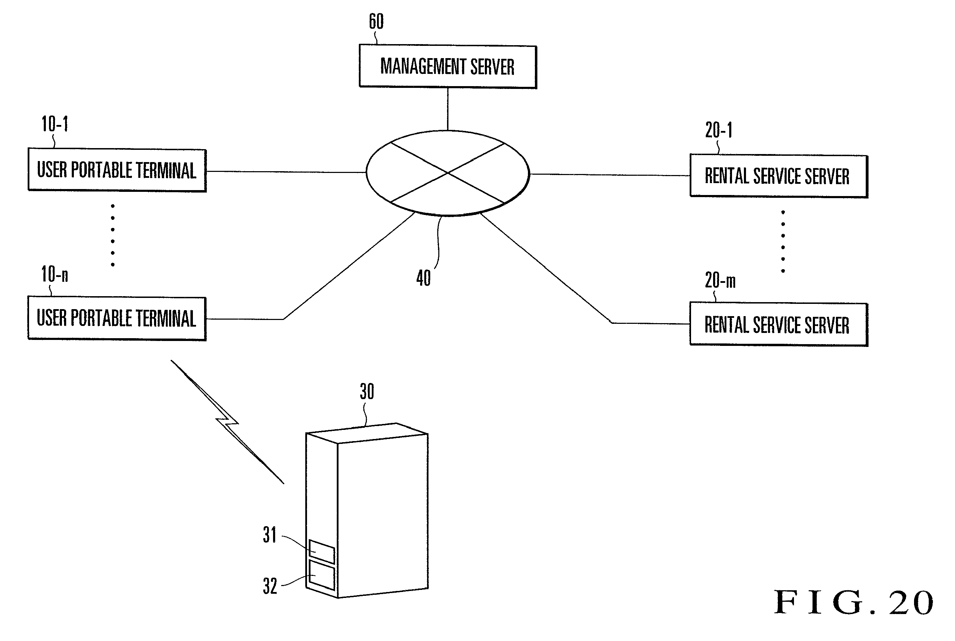

The ninth embodiment of the present invention will be described with reference to Fig. 20.

The ninth embodiment is different from the seventh embodiment in that whether to make a reservation can be determined after confirming rental statuses in a plurality of rental shops by companies whose businesses are different. The remaining configuration is the same as that in the seventh embodiment.

As shown in Fig. 20, a rental service system in the ninth embodiment comprises rental service servers 20 (20-1 to 20-m) for respective rental shops. The rental service system further comprises a management server 60 which connects user portable terminals 10 (10-1 to 10-n) to the rental service servers 20.

### [Management Server 60]

Upon access by the user portable terminal 10, the management server 60 executes user authentication and search for a rental product 30. The management server 60 transmit, to the user portable terminal 10, rental shop display window information representing a rental shop which holds the specified rental product 30.

For this purpose, the management server 60 holds a member DB 20a, product DB 20b, and shop DB 20u which are identical to the above-described ones in the rental service server 20. For each product, the product DB 20b in the management server 60 stores shop codes which hold identical products. The product DB 20b needs not store any rental flag, radio tag identification information, and rental type.

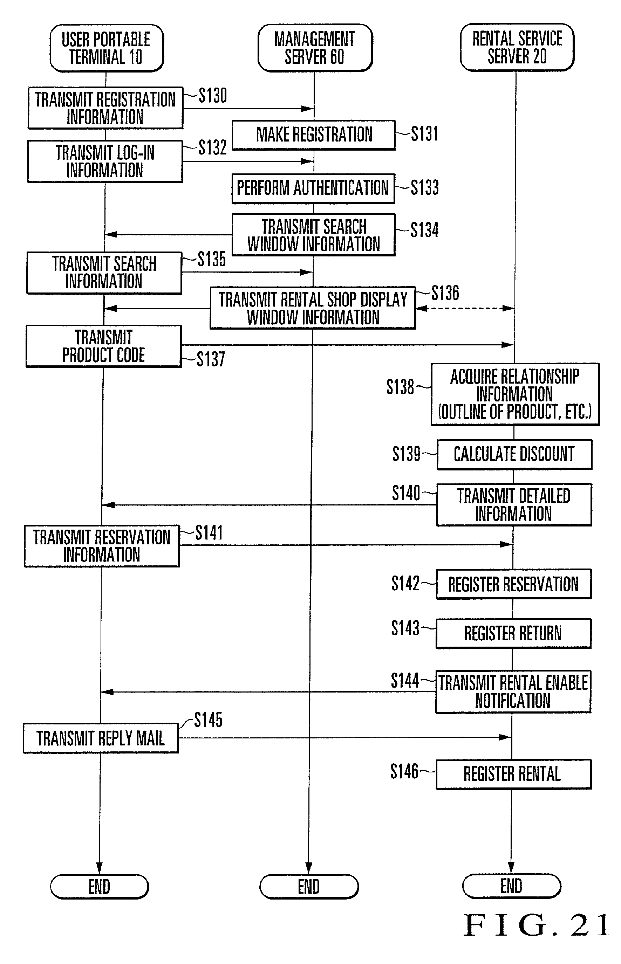

A process sequence in the rental service system according to the ninth embodiment will be explained with reference to Fig. 21.

Operations (steps 130 to 135) of the user portable terminal 10 from operation of transmitting registration information to the management server 60 up to operation of transmitting search information are the same as those (steps 10 to 15) in the first embodiment except that the management server 60 plays the role of the rental service server 20.

The management server 60 specifies the rental product 30 on the basis of search information. Specifying the rental product 30 by the search information can be achieved on the basis of feature information and audio information, similar to the first embodiment.

The management server 60 creates rental shop display window information for displaying a rental shop stocked with the specified rental product 30, and transmits the information to the user portable terminal 10 (step 136). At this time, the management server 60 can access the rental service server 20 corresponding to the rental shop having the specified rental product 30, acquire the rental status and reservation count of the rental product 30, and transmit window information as shown in Fig. 15 to the user portable terminal 10.

If selection of a rental shop is input to the user portable terminal 10, the user portable terminal 10 transmits the product code of the rental product 30 to the rental service server 20 corresponding to the selected rental shop (step 137).

Similar to step 18 in the first embodiment, the rental service server 20 acquires relevant information on the basis of the received product code (step 138). The rental service server 20 calculates a discount (step 139), and transmits these pieces of detailed information to the user portable terminal 10 (step 140).

If the user portable terminal 10 transmits reservation information to the rental service server 20 (step 141), the rental service server 20 registers the reservation (step 142).

If information based on the rental status is displayed in step 136, steps 137 to 140 can be omitted, and batch reservation can be done in step 141, similar to the seventh embodiment. In this case, the user portable terminal 10 receives reservation information from the user, and transmits the input reservation information to the rental service servers 20 of all rental shops subjected to reservation.

If return is registered in the rental service server 20 (step 143), the rental service server 20 transmits a rental enable notification to the user portable terminal 10 (step 144).

If the user portable terminal 10 transmits reply mail (step 145), the rental service server 20 registers rental (step 146).

As described above, according to the rental service system in the ninth embodiment, for example, when a plurality of rental shops are managed by companies whose businesses are different and independent of each other, a management server which mediates between a user portable terminal and a rental service server in each rental shop can be adopted to transmit, to the user terminal, information on a rental shop which holds a rental product to be searched for.

The user can easily grasp whether a plurality of neighborhood rental shops by companies whose businesses are different hold a target product. The user can access the rental service server of a rental shop having the target product, confirm the rental status, and make a rental or reservation registration.

Note that the present invention is not limited to the above-described embodiments, and can be variously changed within the spirit and scope of the invention.

For example, Fig. 6 successively shows user registration in steps 10 and 11 and log-in in steps 12 and 13, but once user registration is made, no subsequent user registration is necessary. Also, log-in need not be performed subsequently to user registration, and step 14 may follow step 11.

Moreover, various serial numbers and the like can be used to identify records in each DB, and can be properly used to, e.g., search for a record in each DB.

Effects obtained by the present invention will be explained.

A rental service server 20 according to the present invention comprises a storage unit 20α which stores rental product information containing rental product identification information and at least one feature information, rental information containing information representing whether a rental product has been rented, and reservation information containing information representing whether the rental product has been reserved, and a search unit 20g which receives, as a search condition, at least part of the rental product identification information and rental product feature information from at least one user terminal 10, searches the storage unit 20α under the search condition, specifies corresponding rental product information and at least one of the rental information and reservation information, and outputs the specified rental product information and rental status information of the rental product to the user terminal 10.

With the above configuration of the rental service server 20, a rental product can also be specified on the basis of rental product identification information and also feature information. Although a plurality of rental products may be specified from feature information, all the specified rental products can be transmitted to the user terminal 10.

The user can easily specify one desired rental product or narrow rental products to one on the basis of feature information such as music used in the rental product or an image obtained from the rental product. The user can easily rent or reserve the rental product.

Various types of information such as rental product information, rental information, and reservation information in the storage unit 20α can be stored in a single or separate storage devices which are incorporated in the rental service server 20 or connected externally, and can be constructed as a single or separate databases.

Rental status information represents a rental status which is obtained on the basis of corresponding rental product information, rental information, reservation information, and the like for a rental product specified by the search unit 20g. The rental status information can contain whether rental is possible/impossible.

In the rental service server 20 according to the present invention, the storage unit 20α comprises a rental product information storage unit 20b which stores audio information of the rental product as rental product information, and the search unit 20g comprises an audio search unit 20g1 which searches the rental product information storage unit on the basis of the audio information serving as a search condition, and specifies corresponding rental product information and at least one of the rental information and reservation information.

With this configuration, a target rental product can be specified on the basis of audio information.

By inputting, e.g., humming to the user terminal 10, the user can specify a rental product whose song name or artist's name is unknown though he can sing the song.

In the rental service server 20 according to the present invention, the storage unit 20α comprises a rental product information storage unit 20b which stores identification information of another rental product relevant to a rental product as rental product information, and the search unit 20g comprises a relevant product search unit 20g2 which searches the rental product information storage unit on the basis of the specified rental product information, acquires identification information of another rental product relevant to the specified rental product, searches the storage unit on the basis of the identification information, acquires rental product information of the relevant rental product, and outputs the rental product information to the user terminal 10.

With this configuration, when a rental product is searched for, another product relevant to the searched rental product can also be displayed as a search result. For example, when a DVD movie is searched for, rental products such as the original book of the movie and the DVD of a stage having the same contents as those of the movie can be displayed together.

The user can attain a variety of information on a target rental product, and his potential interests can also be aroused.

The rental service server 20 according to the present invention further comprises an audio/video output unit 201 which outputs at least one of music information and video information relevant to the rental product, the storage unit 20α comprises a rental product information storage unit 20b which stores at least one of the music information and video information relevant to the rental product as rental product information, and the audio/video output unit 201 receives rental product identification information read from a code added to the rental product by the user terminal 10, searches the rental product information storage unit on the basis of the identification information, acquires either of the music information and video information relevant to the rental product, and outputs the acquired information to the user terminal 10. Alternatively, the audio/video output unit 201 receives rental product save location information read from a code added to the rental product by the user terminal 10, acquires either of the music information and video information relevant to the rental product from the rental product information storage unit on the basis of the save location information, and outputs the acquired information to the user terminal 10.

With this configuration, the user terminal 10 photographs, e.g., a 2D code added to a rental product with a camera, analyzes the 2D code, and transmits, e.g., URL information contained in the code to the rental service server 20. When the rental product is a DVD movie or the like, the rental service server 20 can transmit the preview of the movie or the like to the user terminal 10 on the basis of the URL.

The user can examine rental products as if he browsed, and can select a product to be rented.

Music information or video information can be distributed by download or streaming from the rental service server 20 to the user terminal 10.

In download, music information or video information can be degraded and then transmitted to the user terminal 10. In streaming, the rental service server 20 can transmit music information or video information from the middle of the information on the basis of playback position information transmitted from the user terminal 10. In this manner, when music information or video information is distributed to the user terminal 10 as degraded download data or degraded streaming data, secondary use of the distributed music information or video information by the user terminal 10 can be suppressed.

The save location information can be the above-mentioned URL or the like.

The rental service server 20 according to the present invention further comprises a fee output unit 20n which outputs rental product fee information to the user terminal 10, the storage unit 20α comprises a log information storage unit 20m which stores log information of rental information, and the fee output unit 20n calculates fee information containing a discount for the rental product specified by the search unit 20g on the basis of the log information of the rental information that is stored in the log information storage unit 20m, and transmits the fee information to the user terminal 10.

With this configuration, if a searched rental product can be discounted, a discount can be displayed on the user terminal 10 together with a search result. The utilization rate of a rental product generally decreases a predetermined period after release. For this reason, whether a searched rental product can be discounted is determined on the basis of rental log information, and if so, a discount is transmitted to the user terminal 10 together with the search result.

When the searched rental product can be discounted, the user can be prompted to rent it.

The rental service server 20 according to the present invention further comprises a nonarrival registration unit 20i which, when no rental product can be specified by the search unit 20g, displays a unarrived-product registration window on the user terminal 10, and stores unarrived-product information input from the unarrived-product registration window in the storage unit 20α, and an arrival registration unit 20o which stores the unarrived-product information as rental product information in the storage unit 20α upon input of arrival information on the unarrived-product information stored in the storage unit 20α, and stores reservation information corresponding to the rental product information in the storage unit 20α.

With this configuration, it can be registered to reserve, upon arrival, a product which has not been registered as a rental product in the storage unit 20α, for example, a product which has been released but has not arrived, a product whose planned release date is far ahead, or a product whose sales schedule has not been decided yet.

The user can request a rental product of a rental shop, and the rental shop can grasp user's needs and reflect them on a selection of rental products.

The rental service server 20 according to the present invention further comprises a clearance stock monitoring unit 20q which, when reservation information is registered in the storage unit 20α, refers to rental information on a rental product in the reservation information, when the due date of the rental information is registered in the storage unit 20α, refers to reservation information on a rental product in the rental information, and confirms whether a period of a predetermined number of days or more is present between one of the planned due date and due date in the rental information and a desired rental start date in the reservation information, and a clearance stock notifying unit 20r which, when the clearance stock monitoring unit 20q confirms that the period of the predetermined number of days or more is present for the rental product in the reservation information, transmits information representing that the rental product will be rented at a reduced rental fee, to either the user terminal 10 of another user who registers a reservation for the rental product, or the user terminals 10 of all users.

With this configuration, when rental of a product which has been rented is reserved and the product is returned before a day before a desired rental start date in the reservation, the user terminal 10 can be notified that the rental product will be rented at a reduced rental fee before rental for the reservation.

For example, when the desired rental start date is September 3, a rental product is returned on September 1, and the rental period of the product is three days and two nights, the product cannot be rented on a normal criterion. In this case, in order to efficiently turn over the product, the user can rent the product in a special form.

The rental shop can prompt the member who has reserved a product of, e.g., a rental product which has been returned earlier than expected to rent the product in the clearance period, thereby further increasing the rental efficiency.

The rental service server 20 according to the present invention further comprises a delay remedy unit 20s which, when information representing that a rental product has been returned has not been registered in the rental information on the rental product on a desired rental start date of the rental product in reservation information, confirms, on the basis of the rental information, whether rental products serving as the second and subsequent choices which are registered in the reservation information can be rented, and when the rental products serving as the second and subsequent choices can be rented, outputs rental product information on the rental products serving as the second and subsequent choices to the user terminal 10.

With this configuration, in reserving a rental product, the user can register rental products as the second and subsequent choices such as the second and third choices in case that he cannot rent a target rental product on a desired rental start date because the previous renter delays return or damages the rental product. When the member who has reserved a product cannot rent the rental product, it is confirmed whether rental products serving as the second and subsequent choices can be rented. If so, it can be proposed to rent rental products serving as the second and subsequent choices instead of the reserved rental product. In this case, the rental shop can discount or set free rental products serving as the second and subsequent choices.

The rental shop can compensate for disadvantages to the member who has reserved the product due to delay of return, improving customer services.

Note that information representing that a rental product has been returned can be the above-mentioned due date or the like.

The rental service server 20 according to the present invention further comprises a delay remedy unit 20s which, when information representing that a rental product has been returned has not been registered in rental information on the rental product on a desired rental start date of the rental product in reservation information, searches the storage unit 20α on the basis of identification information of another rental product in rental product information of the unreturned rental product, acquires rental product information of this rental product, and outputs the rental product information to the user terminal 10.

With this configuration, similar to the above-described case, when the member who has reserved a product cannot rent a reserved product, products relevant to the product are automatically searched for to propose rental of these product instead of the reserved rental product. For example, when a suspense movie is reserved and cannot be rented as planned, rental of other suspense movies by the same director or the same cast can be proposed. Also in this case, the rental shop can discount or set free an alternate rental product.

This can minimize demerits to the user.

The rental service server 20 according to the present invention further comprises a rental enable notifying unit 20k which, when information representing that the rental product has been returned is registered for the rental product in the rental information, confirms whether the rental product has been registered in the reservation information, and when the rental product has been registered, transmits a rental enable notification to the user terminal 10 of a member who has reserved the rental product in the reservation information, a rental registration unit 20h which registers the rental information on the rental product upon reception of a reply to the rental enable notification from the user terminal 10, and a payment unit 20t which, when the rental information is registered, executes a payment process on the basis of member information stored in the storage unit 20α for a user in the rental information.

With this configuration, a rental fee can be automatically paid on the basis of a reply to a rental enable notification from the user. More specifically, rental starts when a reply to a rental enable notification is received. A payment process can be done on the basis of, e.g., credit card information of the user that is registered in advance in the rental service server 20.

When the user terminal 10 has the FeliCa® function or the like, the rental service server 20 is equipped with an electronic money processing function and receives payment of a rental fee from electronic money in the user terminal 10 via the communication line 40. The rental fee is added to electronic money in the rental service server 20, achieving a payment process.

The rental service server 20 according to the present invention further comprises a payment unit 20t which, when information for specifying reservation information is received from the user terminal 10, confirms, on the basis of the information for specifying reservation information, whether the reservation information has been registered in the storage unit 20α, confirms whether information representing that the rental product has been returned has been registered in the rental information for the rental product in the reservation information, when the information has been registered, registers rental information corresponding to the reservation information on the rental product in the storage unit 20α, transmits the rental fee of rental to the user terminal 10, subtracts the rental fee from the amount of electronic money in the user terminal 10, and adds the rental fee of rental to the amount of electronic money in the rental service server 20.

With this configuration, a payment process can be done by the user terminal 10 having, e.g., the FeliCa® function when the user receives a rental product in a rental shop, instead of performing the payment process when a reply to a rental enable notification is received.

The rental procedure in the rental shop can be simplified, and a rental queue can be eliminated, increasing the efficiency.

The information for specifying reservation information means information capable of specifying reservation information, and can be a member ID or the like.

In the rental service server 20 according to the present invention, the storage unit 20α comprises a rental shop information storage unit 20u which stores, for each rental product information of a rental product, information on two or more rental shops which rent the rental product, and the search unit 20g comprises a rental shop detection unit 20g3 which, when rental product information is specified, acquires, from the rental shop information storage unit 20u, information on a rental shop which rents a rental product corresponding to the rental product information, and outputs the rental product information and the rental shop information to the user terminal 10.

With this configuration, a plurality of rental shops having rental products which meet a search condition can be displayed. At this time, rental information and reservation information of a rental product in each rental shop can be specified. The rental status of the product in each rental shop can be displayed on the basis of at least one of the rental information and reservation information.

The user can easily grasp a rental shop from which he can rent a target product.

The rental service server 20 according to the present invention further comprises a reservation registration unit 20i which, when a reservation registration request to a rental shop that receives a reply to rental product information and rental shop information output to the user terminal 10 is input, stores reservation information on the rental shop in the storage unit 20α.

With this configuration, when rental products which meet a search condition have been rented and cannot be rented in some or all rental shops having them, reservations can be made at once in some or all rental shops.

The user need not make rental reservations in a plurality of rental shops.

The rental service server 20 according to the present invention further comprises a delay remedy unit 20s which, when information representing that a rental product has been returned has not been registered in the rental information on the rental product on a desired rental start date of the rental product in reservation information, specifies the information on the rental shop which rents the rental product, and at least one of rental information and reservation information of the rental product for each rental shop, and outputs the specified rental product information and rental status information of the rental product to the user terminal 10.

With this configuration, when the member cannot rent a reserved product, information on, e.g., another rental shop capable of renting the product can be transmitted to the user terminal 10.

This can minimize demerits to the user.

The rental service server 20 according to the present invention further comprises a priority processing unit 20v which, when the storage unit 20α stores, for identical rental products, pieces of reservation information on two or more rental shops that are received from the user terminal 10 of a user, and reservation information on one rental shop among two or more rental shops that is received from the user terminal 10 of another user, and when information representing that the identical rental products have been returned within a predetermined time to one rental shop and a rental shop other than this rental shop among two or more rental shops, causes the rental enable notifying unit 20k to transmit a rental enable notification for the reservation information on one rental shop to the user terminal 10 of the latter user, and to transmit a rental enable notification for reservation information on a rental shop other than this rental shop among two or more rental shops to the user terminal 10 of the former user.

With this configuration, when a given user reserves identical rental products in a plurality of rental shops, the products are returned to a plurality of rental shops within a predetermined time and can be rented, and another user reserves a rental product identical to these products in one of the rental shops, the reservation by the latter user is made later than the reservations by the former user, but a rental enable notification for the rental shop can be transmitted to the user terminal 10 of the latter user, and rental enable notifications for rental shops except this rental shop can be transmitted to the user terminal 10 of the former user.

Hence, when reservations in a plurality of rental shops are possible, these reservations can be efficiently adjusted.

By setting a predetermined condition in order to adjust priority, fairness between users can be enhanced. For example, priority can also be adjusted only when the address of a user who makes a reservation first is closer to the address of a rental shop capable of rental than that of a rental shop to which another user makes a reservation.

This can prevent any demerit to a user who makes a reservation first even when priority is adjusted.

A rental service system according to the present invention comprises at least one user terminal 10 and the above-described rental service server 20.

With this configuration, a rental product can be specified on the basis of various types of feature information and audio information. In searching for a rental product, information on separate rental products relevant to the rental product can be acquired and transmitted to the user terminal 10 together with a search result.

Even if the user generally has insufficient information in search, he can specify a target rental product or narrow rental products to one, and easily rent or reserve the rental product.

The user can be provided with information on rental products relevant to a target rental product. The user can obtain a variety of information on the target rental product, and his potential interests can also be aroused. Particularly when the name of a target rental product is unknown and the target rental product is searched for on the basis of feature information or the like, it is estimated that the field of the product is unfamiliar to the user. Thus, the effect of providing information on relevant rental products is great.

According to the rental service system of the present invention, the user photographs, e.g., a 2D code added to a rental product with a camera in a rental shop, reads the 2D code, and transmits it to the rental service server 20. In response to this, the user terminal 10 can receive video information of the rental product or the like.

The user can view the preview of a movie or the like in addition to a description on the back side of the case of a video tape, DVD, or the like. The user can more effectively examine rental products as if he browsed, and select a target rental product.

In searching for a rental product, display of a plurality of rental shops and batch reservation in a plurality of rental shops can be performed.

The user can confirm information on two or more rental shops for a product to be rented, and easily make reservations in two or more rental shops.

The rental service system according to the present invention further comprises at least one rental service server 20 which is arranged for each rental shop, and a management server 60 which is connected to the rental service server 20 via a communication line, and stores information on a rental shop that rents a rental product, for each rental product information containing rental product identification information and at least one feature information, wherein the user terminal 10 transmits a search condition to the management server 60, receives, from the management server 60, rental product information which is specified under a search condition, and information on a rental shop which rents a rental product corresponding to the rental product information, and transmits, to the rental service server 20 in the rental shop, rental product identification information in the rental product information on the basis of the selected/input rental shop information, upon reception of the search condition from the user terminal 10, the management server 60 specifies rental product information under the search condition, acquires the information on the rental shop which rents the rental product corresponding to the specified rental product information, and transmits the rental product information and the rental shop information to the user terminal 10, and upon reception of the rental product identification information from the user terminal 10, the rental service server 20 specifies at least one of rental information and reservation information on the basis of the identification information, and transmits the specified rental product information and rental status information of the rental product to the user terminal 10.

With this configuration, for example, when a plurality of rental shops are managed by companies whose businesses are different and independent of each other, the management server 60 which mediates between the user terminal 10 and the rental service server 20 in each rental shop can be adopted to transmit, to the user terminal 10, information on a rental shop which holds a rental product to be searched for.

The user can easily grasp whether each rental shop stocks with a target product. The user can access the rental service server 20 of a rental shop having the target product, confirm the rental status, and make a rental or reservation registration.

In the rental service system according to the present invention, the user terminal 10 comprises a reception unit 12 which receives, from the rental service server 20, a predetermined signal in rental product information that meets a search condition, and a signal from a radio tag added to a rental product, a terminal-side storage unit 18 which stores the received predetermined signal in the rental product information, and a signal determination unit 17 which compares the predetermined signal stored in the terminal-side storage unit 18 with the signal from the radio tag, and when the predetermined signal and the signal from the ratio tag coincide with each other, transmits a predetermined output.

With this configuration, the user terminal 10 receives in advance a predetermined signal for a target rental product from the rental service server 20, and stores the signal. When the user visits a rental shop and passes by the rental product while bringing the user terminal 10 with him, the user terminal 10 can output a predetermined sound or the like.

The user can recognize that the target rental product is near him, and can easily find out the target rental product.

As has been described above, the present invention can further improve user friendliness in rental services of video tapes, CDs, DVDs, and the like. According to an embodiment of the present invention, a rental service server includes a storage unit and search unit. The storage unit stores rental product information containing rental product identification information and at least one feature information, rental information containing information representing whether a rental product has been rented, and reservation information containing information representing whether the rental product has been reserved. The search unit receives, as a search condition, at least part of the rental product identification information and rental product feature information from at least one user terminal, searches the storage unit under the search condition, specifies corresponding rental product information and at least one of the rental information and reservation information, and outputs the specified rental product information and rental status information of the rental product to the user terminal. A rental service system is also disclosed.

## Claims

1. A rental service server **characterized by** comprising:
storage means (20) for storing rental product information containing rental product identification information and at least one feature information, rental information containing information representing whether a rental product has been rented, and reservation information containing information representing whether the rental product has been reserved; and
search means (20g) for receiving, as a search condition, at least part of the rental product identification information and the rental product feature information from at least one user terminal, searching said storage means under the search condition, specifying corresponding rental product information and at least one of the rental information and the reservation information, and outputting the specified rental product information and rental status information of the rental product to the user terminal.

2. A server according to claim 1, wherein
said storage means comprises rental product information storage means (20b) for storing audio information of the rental product as rental product information, and
said search means comprises audio search means (20g1) for searching said rental product information storage means on the basis of the audio information serving as a search condition, and specifying corresponding rental product information and at least one of the rental information and the reservation information.

3. A server according to claim 1 or 2, wherein
said storage means comprises rental product information storage means (20b) for storing identification information of another rental product relevant to the rental product as rental product information, and
said search means comprises relevant product search means (20g2) for searching said rental product information storage means on the basis of the specified rental product information, acquiring identification information of said another rental product relevant to the specified rental product, searching said storage means on the basis of the identification information, acquiring rental product information of said another rental product, and outputting the rental product information to the user terminal.

4. A server according to anyone of claims 1 to 3, further comprising audio/video output means (201) for outputting at least one of music information and video information relevant to the rental product,
wherein said storage means comprises rental product information storage means (20b) for storing at least one of the music information and the video information relevant to the rental product as rental product information, and
said audio/video output means receives rental product identification information read from a code added to the rental product by the user terminal, searches said rental product information storage means on the basis of the identification information, acquires either of the music information and the video information relevant to the rental product, and outputs the acquired information to the user terminal.

5. A server according to anyone of claims 1 to 4, further comprising audio/video output means (201) for outputting at least one of music information and video information relevant to the rental product,
wherein said storage means comprises rental product information storage means (20b) for storing, as rental product information, at least one of the music information and the video information relevant to the rental product, and
said audio/video output means receives rental product save location information read from a code added to the rental product by the user terminal, acquires either of the music information and the video information relevant to the rental product from said rental product information storage means on the basis of the save location information, and outputs the acquired information to the user terminal.

6. A server according to anyone of claims 1 to 5, further comprising fee output means (20n) for outputting rental product fee information to the user terminal,
wherein said storage means comprises log information storage means (20m) for storing log information of rental information, and
said fee output means calculates fee information containing a discount for the rental product specified by said search means on the basis of the log information of the rental information that is stored in said log information storage means, and transmits the fee information to the user terminal.

7. A server according to anyone of claims 1 to 6, further comprising:
nonarrival registration means (20i) for, when no rental product can be specified by said search means, displaying an unarrived-product registration window on the user terminal, and storing unarrived-product information input from the unarrived-product registration window in said storage means; and
arrival registration means (20p) for storing the unarrived-product information as rental product information in said storage means upon input of arrival information on the unarrived-product information stored in said storage means, and storing reservation information corresponding to the rental product information in said storage means.

8. A server according to anyone of claims 1 to 7, further comprising:
clearance stock monitoring means (20q) for, when reservation information is registered in said storage means, referring to rental information on a rental product in the reservation information, when a due date of the rental information is registered in said storage means, referring to reservation information on a rental product in the rental information, and confirming whether a period of not less than a predetermined number of days is present between one of a planned due date and the due date in the rental information and a desired rental start date in the reservation information; and
clearance stock notifying means (20r) for, when said clearance stock monitoring means confirms that the period of not less than the predetermined number of days is present for the rental product in the reservation information, transmitting information representing that the rental product will be rented at a reduced rental fee, to either of a user terminal of another user who registers a reservation for the rental product, and user terminals of all users.

9. A server according to anyone of claims 1 to 8, further comprising delay remedy means (20s) for, when information representing that the rental product has been returned has not been registered in the rental information on the rental product on a desired rental start date of the rental product in reservation information, confirming, on the basis of the rental information, whether rental products serving as second and subsequent choices which are registered in the reservation information can be rented, and when the rental products serving as the second and subsequent choices can be rented, outputting rental product information on the rental products serving as the second and subsequent choices to the user terminal.

10. A server according to anyone of claims 1 to 9, further comprising delay remedy means (20s) for, when information representing that the rental product has been returned has not been registered in the rental information on the rental product on a desired rental start date of the rental product in reservation information, searching said storage means on the basis of identification information of another rental product in rental product information of the unreturned rental product, acquiring rental product information of said another rental product, and outputting the rental product information of said another rental product to the user terminal.

11. A server according to anyone of claims 1 to 10, further comprising:
rental enable notifying means (20k) for, when information representing that the rental product has been returned is registered for the rental product in the rental information, confirming whether the rental product has been registered in the reservation information, and when the rental product has been registered, transmitting a rental enable notification to a user terminal of a member who has reserved the rental product in the reservation information;
rental registration means (20h) for registering the rental information on the rental product upon reception of a reply to the rental enable notification from the user terminal; and
payment means (20t) for, when the rental information is registered, executing a payment process on the basis of member information stored in said storage means for a user in the rental information.

12. A server according to anyone of claims 1 to 11, further comprising payment means (20t) for, when information for specifying reservation information is received from the user terminal, confirming, on the basis of the information for specifying reservation information, whether the reservation information has been registered in said storage means, confirming whether information representing that the rental product has been returned has been registered in the rental information for the rental product in the reservation information, when the information has been registered, registering rental information corresponding to the reservation information on the rental product in said storage means, transmitting a rental fee of rental to the user terminal, subtracting the rental fee from an amount of electronic money in the user terminal, and adding the rental fee of rental to an amount of electronic money in the rental service server.

13. A server according to claim 11, wherein
said storage means comprises rental shop information storage means (20u) for storing, for each rental product information of a rental product, information on at least two rental shops which rent the rental product, and
said search means comprises rental shop detection means (20g3) for, when rental product information is specified, acquiring, from said rental shop information storage means, information on a rental shop which rents a rental product corresponding to the rental product information, and outputting the rental product information and the rental shop information to the user terminal.

14. A server according to claim 13, further comprising reservation registration means (20i) for, when a reservation registration request to a rental shop which receives a reply to the information output to the user terminal is input, storing reservation information on the rental shop in said storage means.

15. A server according to claim 13 or 14, further comprising delay remedy means (20s) for, when information representing that the rental product has been returned has not been registered in the rental information on the rental product on a desired rental start date of the rental product in reservation information, specifying the information on the rental shop which rents the rental product, and at least one of rental information and reservation information of the rental product for each rental shop, and outputting the specified rental product information and rental status information of the rental product to the user terminal.

16. A server according to anyone of claims 13 to 15, further comprising priority processing means (20v) for,
when said storage means stores, for identical rental products, pieces of reservation information on at least two rental shops that are received from a user terminal of a given user, and reservation information on one rental shop among said at least two rental shops that is received from a user terminal of another user, and
when information representing that the identical rental products have been returned within a predetermined time to said one rental shop and a rental shop other than said one rental shop among said at least two rental shops,
causing said rental enable notifying means to transmit a rental enable notification for the reservation information on said one rental shop to the user terminal of said another user, and to transmit a rental enable notification for reservation information on a rental shop other than said one rental shop among said at least two rental shops to the user terminal of the given user.

17. A rental service system **characterized by** comprising:
at least one user terminal (10); and
a rental service server (20) which specifies a rental product on the basis of information received from said user terminal and performs either of rental and reservation registration,
wherein said user terminal transmits, as a search condition to said rental service server, at least part of rental product identification information and rental product feature information, and
said rental service server comprises
storage means (20) for storing rental product information containing rental product identification information and at least one feature information, rental information containing information representing whether a rental product has been rented, and reservation information containing information representing whether the rental product has been reserved, and
search means (20g) for, upon reception of the search condition from said user terminal, searching said storage means under the search condition, specifying corresponding rental product information and at least one of the rental information and the reservation information, and transmitting the specified rental product information and rental status information of the rental product to said user terminal.

18. A system according to claim 17, wherein
said storage means comprises rental product information storage means (20b) for storing audio information of the rental product as rental product information, and
said search means comprises audio search means (20g1) for, upon reception of the audio information as a search condition, searching said rental product information storage means on the basis of the audio information, and specifying corresponding rental product information and at least one of the rental information and the reservation information.

19. A system according to claim 17 or 18, wherein
said storage means comprises rental product information storage means (20b) for storing identification information of another rental product relevant to the rental product as rental product information, and
said search means comprises relevant product search means (20g2) for searching said rental product information storage means on the basis of the specified rental product information, acquiring identification information of said another rental product relevant to the specified rental product, searching said storage means on the basis of the identification information, acquiring rental product information of said another rental product, and transmitting the rental product information to said user terminal.

20. A system according to anyone of claims 17 to 19, wherein
said rental service server further comprises audio/video output means (201) for outputting at least one of music information and video information relevant to the rental product,
said storage means comprises rental product information storage means (20b) for storing at least one of the music information and the video information relevant to the rental product as rental product information, and
said audio/video output means receives rental product identification information read from a code added to the rental product by said user terminal, searches said rental product information storage means on the basis of the identification information, acquires either of the music information and the video information relevant to the rental product, and transmits the acquired information to said user terminal.

21. A system according to anyone of claims 17 to 20, wherein
said rental service server further comprises audio/video output means (201) for outputting at least one of music information and video information relevant to the rental product,
said storage means comprises rental product information storage means (20b) for storing, as rental product information, at least one of the music information and the video information relevant to the rental product, and
said audio/video output means receives rental product save location information read from a code added to the rental product by said user terminal, acquires either of the music information and the video information relevant to the rental product from said rental product information storage means on the basis of the save location information, and transmits the acquired information to said user terminal.

22. A system according to anyone of claims 17 to 21, wherein
said rental service server further comprises payment means (20t) for, when information for specifying reservation information is received from said user terminal, confirming, on the basis of the information for specifying reservation information, whether the reservation information has been registered in said storage means, confirming whether information representing that the rental product has been returned has been registered in the rental information for the rental product in the reservation information, when the information has been registered, registering rental information corresponding to the reservation information on the rental product in said storage means, transmitting a rental fee of rental to said user terminal, and adding the rental fee of rental to an amount of electronic money in said rental service server, and
said user terminal subtracts the rental fee from an amount of electronic money in said user terminal upon reception of the rental fee from said rental service server.

23. A system according to anyone of claims 17 to 22, wherein
said storage means comprises rental shop information storage means (20u) for storing, for each rental product information of a rental product, information on a rental shop which rents the rental product, and
said search means comprises rental shop detection means (20g.3) for, when rental product information is specified, acquiring, from said rental shop information storage means, information on a rental shop which rents a rental product corresponding to the rental product information, and transmitting the rental product information and the rental shop information to said user terminal.

24. A system according to claim 23, wherein said rental service server further comprises reservation registration means (20i) for, when a reservation registration request to a rental shop which receives a reply to the information transmitted to said user terminal is input, storing reservation information on the rental shop in said storage means.

25. A system according to anyone of claims 17 to 24, wherein comprising:
at least one rental service server which is arranged for each rental shop; and
a management server (60) which is connected to said rental service server via a communication line, and stores information on a rental shop that rents a rental product, for each rental product information containing rental product identification information and at least one feature information,
wherein said user terminal transmits a search condition to said management server, receives, from said management server, rental product information which is specified under the search condition, and information on a rental shop which rents a rental product corresponding to the rental product information, and transmits, to said rental service server in the rental shop, rental product identification information in the rental product information on the basis of the selected/input rental shop information,
upon reception of the search condition from said user terminal, said management server specifies rental product information under the search condition, acquires the information on the rental shop which rents the rental product corresponding to the specified rental product information, and transmits the rental product information and the rental shop information to said user terminal, and
upon reception of the rental product identification information from said user terminal, said rental service server specifies at least one of rental information and reservation information on the basis of the identification information, and transmits the specified rental product information and rental status information of the rental product to said user terminal.

26. A system according to anyone of claims 17 to 25, wherein user terminal comprises
reception means (12) for receiving, from said rental service server, a predetermined signal in rental product information which meets the search condition, and a signal from a radio tag added to the rental product,
terminal-side storage means (18) for storing the received predetermined signal in the rental product information, and
signal determination means (17) for comparing the predetermined signal stored in said terminal-side storage means with the signal from the radio tag, and when the predetermined signal and the signal from the ratio tag coincide with each other, transmitting a predetermined output.
